# EUROPÄISCHE PATENTSCHRIFT

(11) **EP 2 566 104 B1**
(45) Veröffentlichungstag und Bekanntmachung des Hinweises auf die Patenterteilung: **05.04.2017**
(21) Anmeldenummer: 12181093.1
(22) Anmeldetag: 20.08.2012
(51) Int. Cl.: H04W 28/16, H04L 12/24, H04J 3/16, G08C 15/06

(54) **Verfahren und Gerät zur Übertragung von Daten in einem hierarchisch gegliederten Funknetzwerk**
Method and device for transferring data in a hierarchical wireless network
Procédé et appareil destinés à transmettre des données dans un réseau radio partagé de manière hiérarchique

(30) Priorität: 01.09.2011 DE 102011112047
(43) Veröffentlichungstag der Anmeldung: 06.03.2013
(73) Patentinhaber: Techem Energy Services GmbH, 65760 Eschborn (DE)
(72) Erfinder: Matussek, Dirk, 60318 Frankfurt am Main (DE); Simon, Winfried, 64579 Gernsheim (DE)
(74) Vertreter: Keil & Schaafhausen Patent- und Rechtsanwälte PartGmbB

(56) Entgegenhaltungen:
- EP-A2- 1 037 185
- WO-A1-02/37752
- US-A- 5 598 417
- HUA QIN ET AL: "An integrated network of roadside sensors and vehicles for driving safety: Concept, design and experiments", PERVASIVE COMPUTING AND COMMUNICATIONS (PERCOM), 2010 IEEE INTERNATIONAL CONFERENCE ON, IEEE, PISCATAWAY, NJ, USA, 29. März 2010 (2010-03-29), Seiten 79-87, XP031677619, ISBN: 978-1-4244-5329-0

## Beschreibung

Die Erfindung betrifft ein Verfahren und ein Gerät zur Übertragung von Daten in einem hierarchisch gegliederten und synchron betriebenen Funknetzwerk, insbesondere in einem hierarchisch gegliederten Verbrauchserfassungs- und/oder Sensorfunknetzwerk, in dem Daten insbesondere von einem Verbrauchserfassungsgerät und/oder einem Sensor über Knoten des Funknetzwerkes zu einem Zentralknoten übertragen werden und/oder Daten von einem Zentralknoten zu einem oder mehreren Knoten und/oder ggf. auch Verbrauchserfassungsgeräten oder Sensoren übertragen werden. Das hierarchisch gegliederte Funknetzwerk ist in einer Baumtopologie mit einem Zentralknoten als Wurzel im Sinne der ranghöchsten Hierarchieebene aufgebaut, wobei jedem Knoten eine eindeutige Knotennummer, genau ein Zeitschlitz zum Senden von Daten in dem zeitlich synchronisierten Funknetzwerk und - soweit es sich nicht um den Zentralknoten handelt - vorzugsweise genau ein Elternknoten in einer ranghöheren Hierarchieebene, insbesondere durch das Mitteilen der Knotennummer des Elternknotens, zugewiesen sind und wobei die Zeitschlitze der Knoten (einschließlich des Zentralknotens) oder aller an dem Funknetzwerk beteiligten Knoten oder aller maximal in das Funknetzwerk einbindbaren Knoten in einem Zeitschlitzblock zusammengefasst sind.

Ein Knoten ist dabei ein Gerät, welches an der Kommunikation in dem Funknetzwerk teilnimmt und Teil einer der Hierarchieebenen des Funknetzwerkes ist. Ein an dem Funknetzwerk teilnehmender Knoten kann daher Daten von einem anderen Knoten empfangen und/oder Daten zu einem anderen Knoten senden. In einem Verbrauchserfassungs-Funknetzwerk kann ein Knoten insbesondere ein Datensammler sein, an den einzelne Verbrauchserfassungsgeräte und/oder Sensoren angeschlossen sind, die ihre Daten per Funk oder auch drahtgebunden an den speziellen Datensammler übersenden. Grundsätzlich könnte ein Sensor eines Verbrauchserfassungs- oder Sensorgerätes auch mit in den Datensammler integriert sein.

Als Zentralknoten, der bspw. als Masterdatensammler ausgebildet sein kann, wird das in der Hierarchie ranghöchste Gerät bezeichnet, das die sog. Wurzel in der Baumtopologie des hierarchisch gegliederten Funknetzwerkes darstellt. Der Zentralknoten oder Masterdatensammler kann sich durch bestimmte Zusatzfunktionen von bestimmten Datensammlern unterscheiden, bspw. die Verwaltung aller erfassten Daten oder die Weiterverarbeitung der erfassten Daten in einer ergänzenden Anwendung, d.h. eine Smart-Metering-Funktion, bei der aus im Rahmen der Verbrauchswerterfassung erhobenen Daten zusätzliche Informationen abgeleitet werden, bspw. für einer wärmebedarfsadaptive Vorlauftemperaturregelung einer Heizungsanlage. Der Masterdatensammler kann sich insbesondere auch dadurch auszeichnen, dass er das hierarchisch gegliederte Funknetzwerk konfiguriert und die Topologie festlegt. Der Knoten der ranghöheren Hierarchieebene, der als Elternknoten einem Knoten in dem Funknetzwerk bekannt gegeben wird, kann ggf. auch der zentral vorgesehene Zentralknoten sein, der bis auf die speziell dem Zentralknoten zugewiesenen Funktionen einem normalen Knoten in der Funknetzwerk entsprechen kann. Der Zentralknoten selbst weist aufgrund seiner ranghöchsten Stellung in der Hierarchie natürlich keinen Elternknoten auf. In diesem Sinne kann mit "Knoten" nachfolgend auch der Elternknoten gemeint sein, sofern seine besondere Stellung in dem Funknetzwerk dem nicht entgegensteht.

In dem durch das Funknetzwerk aufgebauten Datenübertragungssystem sind also ein oder mehrere Geräte bzw. Stationen, welche als Knoten bezeichnet werden, mit einer zentralen Stationen, die als Zentralknoten bezeichnet wird, vernetzt. Durch die baumartige Vernetzung der Topologie des Funknetzwerks ist jeder Knoten direkt oder über mindestens einen anderen Knoten mit dem Zentralknoten verbunden, wobei die Verbindungen in einem Funknetzwerk naturgemäß unsicher sein können, wenn die Funkverbindung bspw. temporär gestört wird.

In der Praxis werden solche Datenübertragungssysteme insbesondere auch in Systemen zur Verbrauchserfassung von Wärme, Wasser, Gas und/oder Strom in Wohn- oder Gewerbegebäuden eingesetzt. Dabei kommen typischerweise batteriebetriebene Verbrauchserfassungs- und/oder Sensorgeräte zum Einsatz, die regelmäßig per Funk Verbrauchswerte und/oder andere Prozessdaten an als Knoten fungierende Datensammler in Funkreichweitenbereich übertragen. Die Datensammler sind wiederrum untereinander per Funk vernetzt und übermitteln die Daten an einen zentralen Datensammler (Zentralknoten), der typischerweise auch über eine Datenfernübertragung in einem bspw. öffentlichen Telekommunikationsnetz mit einer zentralen Abrechnungs- und Prozessleitstelle in Verbindung steht.

Der zentrale Datensammler (Zentralknoten) muss umgekehrt, bspw. wenn er Aufgaben der Verwaltung des Funknetzwerks übernimmt, auch Daten an die Datensammler übermitteln. Dies können Ablesekommandos sein, aber bspw. auch Listen von den Datensammlern zugeordneten Verbrauchserfassungsgeräten, Kommandos zum Stellen der Geräteuhrzeit (Synchronisation) oder Steuersignale bspw. für eine Heizungsanlage im Rahmen von Smart-Metering-Funktionen. Diese Übertragungen und Funktionen sind beispielhaft für eine Reihe weiterer möglicher Kommunikationen von dem Zentralknoten zu den einzelnen Knoten genannt.

Alle Datensammler (Knoten) im Netzwerk verfügen also über eine bidirektionale Kommunikation und damit über mindestens je einen Sender und Empfänger. Um eine einfache Installation der einzelnen Datensammler in den Gebäuden zu erreichen, sind neben den Verbrauchserfassungsgeräten auch die Datensammler meist batteriebetrieben, wobei der mit einer Reihe von Zusatzfunktionen ausgestattete zentrale Datensammler ggf. auch netzbetrieben sein kann. Die Verbrauchserfassungsgeräte und Datensammler sollen aus Gründen der Wirtschaftlichkeit Batterielebensdauern von mehr als zehn Jahren haben, um häufige Wartungseinsätze zum Batterietausch zu vermeiden. Ggf. kann aber auch der zentrale Datensammler im Rahmen dieser Erfindung batteriebetrieben sein, um die Verkabelung zur Netzversorgung und den damit verbundenen Installationsaufwand einzusparen.

Die Erfindung bezieht sich neben dem besonders bevorzugten Fall eines Funknetzwerks zur Verbrauchsdatenerfassung also auch auf Formen von drahtlosen Kommunikationsnetzwerken, vorzugsweise innerhalb eines Gebäudes, mit batteriebetriebenen Sensor- und/oder Aktuatorgeräten.

Aus der DE 199 11 657 A1 bzw. der parallelen EP 1 037 185 A2 ist ein Verfahren zur Datenübertragung in einem hierarchisch geordneten Funknetz mit Datensammelstationen und diesen zugeordneten Verbrauchsmessern bekannt, bei dem alle Daten an eine zentrale Datenverwaltungsstation übertragen werden, wobei den Datensammelstationen und der Datenverwaltungsstation jeweils feste Zeitschlitze in einem Zeitschlitzblock zugewiesen sind. Die Datenübertragung zwischen den Datensammelstationen und der Datenverwaltungsstation findet in Zeitsegmenten statt, die eine zur topologischen Hierarchie des Netzwerks analoge Hierarchie von Zeitschlitzblöcken umfassen, d.h. in den Zeitsegmenten sind eine der Anzahl der Hierarchieebenen entsprechende Anzahl von Zeitschlitzblöcken vorgesehen. Jeder Zeitschlitzblock dient nur der Kommunikation der Knoten von einer in eine benachbarte Hierarchieebene. Allerdings sind in jedem Zeitschlitzblock Sendezeitschlitze und Empfangszeitschlitze für alle Knoten vorhanden, auch wenn diese je nach Zugehörigkeit der Knoten zu einer Hierarchieebene in diesem Zeitschlitzblock nicht benutzt werden. Die Datenverwaltungsstation sendet ferner regelmäßig ein Synchronisier-Datenpaket aus, das in dem Netzwerk an alle Sammelstationen weitergeleitet wird und es den Sammelstationen erlaubt, sich laufend mit dem netzwerkweiten Zeitschlitzschema synchron zu halten.

Dieser Aufbau hat zur Folge, dass zwar die Sende- und Empfangszeitfenster in der synchronisierten Kommunikation genau bekannt sind und die jeweiligen Geräte bei für sie nicht relevanten Zeitfenstern in eine batteriesparende Ruhefunktion wechseln können, in einem Zeitschlitzblock aber nur von einer in die nächste Hierarchieebene kommuniziert werden kann. Um eine Kommunikation durch alle Hierarchieebenen vornehmen zu können, muss ein Zeitsegment abgewartet werden, das mindestens eine der Anzahl der Hierarchieebenen entsprechende Anzahl von Zeitschlitzblöcken aufweisen muss. Da jeder Zeitschlitzblock mindestens so viele Zeitschlitze enthält, wie Datensammelstationen an dem Funknetz beteiligt sind, dauert es gerade bei größeren Funknetzen vergleichsweise lange, bis die Daten durch alle Hierarchieebenen transportiert sind. Dies ist insbesondere dann nachteilig, wenn die Daten nicht nur zur Verbrauchswerterfassung, sondern auch zu anderen Zwecken verwendet werden.

Weiterhin wird in der DE 199 11 657 A1 bzw. der EP 1 037 185 A2 vorgeschlagen, die Nachrichten zur Stromersparnis als unquittierte Broadcast-Botschaft zu versenden. Durch den Verzicht auf die Quittierung wird es bei der Übertragung großer Datenmengen, wie sie bspw. bei der Ablesung vieler Verbrauchserfassungsgeräte anfallen, über etliche Hierarchieebenen in dem per se unsicheren und störungsanfälligen Übertragungsmedium Funk zu einer hohen oder zumindest nicht zu vernachlässigenden Wahrscheinlichkeit kommen, dass einzelne Datenpakte gestört sind und deshalb nachgefragt und wiederholt werden müssen. Wenn bei der Auslegung eines solchen Netzwerks bspw. pro Funkübertragungsstrecke eine Störwahrscheinlichkeit von *p*₀ =10% angenommen wird und die Hierarchietiefe des Netzwerks H = 5 beträgt, ergibt sich für eine Datenübertragung durch das gesamte Netzwerk, d.h. durch alle Hierarchieebenen, in eine Übertragungsrichtung eine Gesamtstörwahrscheinlichkeit pro Datenpaket von *p_{ges}*=1-(1-*p*₀)*^{H}*=41%. Auch wenn die mittlere Störwahrscheinlichkeit im Betrieb niedriger sein wird, ist diese Annahme der Störwahrscheinlichkeit für die Auslegung wichtig, da das Netzwerk bis zu der angenommenen Auslegungs-Störwahrscheinlichkeit robust funktionieren muss.

Gerade bei großen zu übertragenden Datensätzen, die wegen einer begrenzten Zeitschlitzlänge und Einschränkungen der bei der Batterie-Energieversorgung häufig auf mehrere Datentelegramme aufgeteilt werden müssen, ergibt sich also zwangsläufig eine hohe Rate an Datenpaketen, die nicht korrekt empfangen werden und daher nachgefragt werden müssen. Dabei sind die Nachfragen ebenso wie die erneut auf Nachfrage ausgesendeten Datenpakte der gleichen Störwahrscheinlichkeit unterworfen. So kommt es mit beträchtlicher Wahrscheinlichkeit zu mehreren Runden der Nachfrage und Wiederholung von Datenpaketen im Netzwerk mit entsprechend langen Übertragungszeiten und einem erhöhten Energieverbrauch bei den batteriebetriebenen Datensammelstationen.

Die WO 2006/031739 A2 beschreibt ein ähnliches Verfahren in einem hierarchisch gegliederten Funknetzwerk, bei dem die Kommunikationszeiten (jeweils Empfangs- und Sendezeit) der verschiedenen Hierarchieebenen derart versetzt zueinander angeordnet sind, dass die Sendezeit der sendenden Hierarchieebene und die Empfangszeit der nachfolgenden empfangenden Hierarchieebene sich gerade überschneiden. Ferner ist vorgesehen, dass die Empfangszeit einer Hierarchieebene immer vor der Sendezeit der Hierarchieebene liegt. Damit wird erreicht, dass eine Nachricht grundsätzlich nach einer Zykluszeit durch alle Hierarchieebenen transportiert werden kann, wobei die Zykluszeit gerade der Kommunikationszeit multipliziert mit der Anzahl der Hierarchieebenen entspricht. Allerdings ist vorgesehen, dass alle Geräte einer Hierarchieebene in der dieser Hierarchieebene zugewiesenen Sendezeit kommunizieren. Dies führt in der Praxis zu Kollisionen der Datentelegramme, so dass eine schnelle und zuverlässige Kommunikation nicht möglich ist.

Aus der WO 02/37752 A1 ist eine Multi-Hop-Kommunikation durch ein Mesh-Netzwerk bekannt. Bei einem Mesh-Netzwerk handelt es sich um ein vermaschtes Netzwerk, in dem jeder Netzwerkknoten in der Regel mit mehreren anderen Netzwerkknoten verbunden ist. Die Informationen werden von Knoten zu Knoten weitergereicht, bis sie ihr Ziel erreichen. Wenn ein Knoten oder eine Verbindung zwischen zwei Knoten gestört ist, kann sich das Netzwerk aufgrund der Vermaschung um diese Störung herum neu aufbauen. Die Daten werden umgeleitet und das Netzwerk ist nach wie vor voll funktionsfähig, bspw. um die Daten einem als Senke dienendem Knoten (wie einem Knoten mit Backbone-Anschluss) zuzuleiten. Häufig handelt es sich bei den Mesh-Netzen um mobile ad-hoc-Netze.

Für ein solches Netz schlägt die WO 02/37752 A1 nun vor, die einzelenen Netzwerkknoten zu Gruppen zusammenfassen. Eine Gruppe enthält dabei alle Netzwerkknoten, die eine bestimmte Anzahl von Zwischenübertragungen (Hops) benötigen, bis ihre Daten bei dem als Senke dienenden Knoten ankommen. Durch diese Anordnung wird also eine Art Hierarchie der Knoten um den als Senke dienenden Knoten gebildet, die sich aus der Anzahl der notwendigen Zwischenübertragungen bis zu dem als Senke dienenden Knoten jeweils ergibt. Ziel ist es, für hoch priorisierte Daten eine schnelle und definierte Übertragung in dem Netz zu erreichen.

Für eine so definierte Gruppe von Knoten wird in einer einem Zeitsegment entsprechenden Zeitsequenz (Time Sequence) eine Reservierungsperiode vorgesehen, in der eine Kommunikation zwischen Knoten einer Gruppe mit einer vorgesehenen anderen Gruppe, d.h. zwischen zwei Hierarchieebenen, stattfinden kann. In einer Reservierungsperiode können auch zwei Gruppen gleichzeitig kommunizieren, wobei die beiden Gruppen dann in entgegengesetzter Kommunikationsrichtung kommunizieren. Die Reservierungsperioden sind in der Zeitsequenz so angeordnet, dass nach Durchlaufen einer Zeitsequenz eine Kommunikation durch das ganze Netzwerk, d.h. über alle Hierarchieebenen, erfolgt sein kann.

Innerhalb der Reservierungsperiode findet die Datenübertragung in definierten Zeitschlitzen des synchronisierten Netzwerks statt, wobei jeder Knoten mit seinen Nachbarknoten bestimmte Zeitschlitze zur Vermeidung von Kollisionen aushandelt. Die Auswahl eines Zeitschlitzes ist nur dadurch beschränkt, dass er für eine bestimmte Hierarchieebene (Hop-Zahl) innerhalb der Reservierungsperiode liegen muss. Ansonsten sind der Übertragungsweg und die Auswahl der Sendezeitschlitze entsprechend der Organisation eines Mesh-Datennetzes frei. Der hierarchieebenen-übergreifende Kommunikationsweg zwischen den einzelnen Knoten ist also nicht vorgegeben.

Aus der EP 1 750 475 A2 ist ein Datenübertragungssystem bekannt, bei dem unidirektional sendende Primärsender Daten an primäre Empfänger senden, die die Daten dann an einen Master weitersenden. Ein primärer Empfänger empfängt die von einem ihm zugeordneten Primärsender ausgesendeten Daten zu einem definierten Sendezeitpunkt, zu dem er auf Empfangsbereitschaft geht. Die ausgesendeten Daten enthalten neben inhaltlichen Informationen auch den nächsten Sendezeitpunkt des Primärsenders, zu dem der primäre Empfänger wieder auf Empfang schaltet. Um Gangunterschiede in den verschiedenen Sende- und Empfangsgeräten zu korrigieren, wertet der primäre Empfänger die Differenz des tatsächlichen Empfangszeitpunkt von dem erwarteten Empfangszeitpunkt aus und korrigiert den Empfangszeitpunkt des nächsten Empfangszeitfensters entsprechend. Hier besteht der Nachteil, dass der Verwaltungsaufwand für die zeitliche Koordination hoch ist und es aufgrund von Verschiebungen der Sende- und Empfangszeitpunkte zu Störungen im Kommunikationsablauf kommen kann. Bspw. kann sich die Kommunikationszeit durch das Netzwerk erhöhen, wenn sich der Empfangszeitpunkt von Daten hinter den Zeitpunkt verschiebt, zu dem die Daten in Richtung Master weitergeleitet werden.

Aufgabe der Erfindung ist daher die Verringerung der Übertragungszeit von Daten durch das Kommunikationsnetzwerk bei gleichzeitiger Verringerung des Energieverbrauchs der insbesondere batteriebetriebenen Netzknoten.

Diese Aufgabe wird mit den Merkmalen der Ansprüche 1, 12 und 13 durch ein geeignetes Verfahren zur Übertragung von Daten in dem hierarchisch gegliederten Funknetzwerk, ein Gerät zur Teilnahme an der Kommunikation in diesem Funknetzwerk und dem entsprechend organisierten Funknetzwerk gelöst.

Bei dem Verfahren der eingangs genannten Art ist dazu insbesondere vorgesehen, dass die den einzelnen Knoten zugewiesenen Knotennummern derart gewählt werden, dass jeder Knoten eine höhere Knotennummer als sein Elternknoten aufweist, und dass die Zuordnung der Knotennummer zu einem Zeitschlitz in dem Zeitschlitzblock abhängig von der Kommunikationsrichtung durch die Hierarchieebenen des Funknetzwerkes derart erfolgt, dass in Aufwärtsrichtung von dem Zentralknoten zu einem oder mehreren Knoten ein Knoten mit einer höheren Knotennummer einem in dem Zeitschlitzblock zeitlich später angeordneten Zeitschlitz zugeordnet ist und dass in der Abwärtskommunikation von einem Knoten zu dem Zentralknoten ein Knoten mit einer niedrigeren Knotennummer einem in dem Zeitschlitzblock zeitlich später angeordneten Zeitschlitzblock zugeordnet ist. Letzteres ist gleichbedeutend damit, dass in der Abwärtskommunikation ein Knoten mit einer höheren Knotennummer einem in dem Zeitschlitzblock zeitlich früher angeordneten Zeitschlitz zugeordnet ist. Eine entsprechende Definition lässt sich auch für Aufwärtskommunikation geben.

Der Begriff der höheren Knotennummer ist erfindungsgemäß also derart zu verstehen, dass in einer aufsteigend sortierten Reihe der Knoten entlang eines Astes der hierarchischen Verästelung von dem Zentralknoten, d.h. der ranghöchsten Hierarchieebene, zu dem in dem bzw. einem Ast letzten Knoten, d.h. der rangniedrigsten Hierarchieebene, der Knoten mit der höheren Knotennummer später aufgeführt ist. Dies gilt für alle Knoten entlang der in der Topologie vorhandenen Verästelungen in dem hierarchisch aufgebauten Funknetzwerk. Der Begriff "höhere Knotennummer" muss also nicht die numerisch größere Zahl bedeuten, auch wenn dies eine einfachere Möglichkeit der Sortierung ist, bei der Zentralknoten die numerisch kleinste Zahl und der in einem Ast letzte Knoten die numerisch größte Zahl in diesem Ast der Netzwerktopologie als Knotennummer aufweist. Damit ist natürlich gleichwertig der Fall, in dem der zentrale Knoten die numerisch größte Zahl als Knotennummer aufweist, von der in der Reihe der Knoten numerisch heruntergezählt wird. Entsprechendes gilt umgekehrt für den Begriff "niedrigere Knotennummer".

Schließlich kommen auch andere numerische oder nicht numerische Ordnungskriterien in Frage, bspw. eine alphabetische Sortierung oder dergleichen. Die Erfindung ist also nicht auf das konkrete Ordnungssystem beschränkt, sondern umfasst alle Ordnungssysteme, mit denen die erfindungsgemäß beschriebene Zuordnung erreicht werden kann.

Diese erfindungsgemäße Zuordnung der Knotennummer zu den Zeitschlitzen hat also zur Folge, dass die Reihenfolge der den Zeitschlitzen zugeordneten Knoten bzw. Knotennummern in der Aufwärtskommunikation und in der Abwärtskommunikation jeweils umgekehrt sind. Dadurch ist es möglich, dass ein von einem Knoten empfangenes Datenpaket noch innerhalb desselben Zeitschlitzblocks in einer Kommunikationsrichtung von dem empfangenden Knoten wieder ausgesendet werden kann. Somit ist es möglich, die gesamte hierarchische Struktur des Funknetzwerks in einem Zeitschlitzblock zu durchlaufen und das Datenpaket sehr schnell durch das Funknetzwerk zu übertragen, ohne dabei ein aus mehreren Zeitschlitzblöcken gebildetes Zeitsegment abwarten zu müssen. Dies funktioniert bei dem erfindungsgemäß vorgeschlagenen Verfahren unabhängig von der Topologie des Funknetzwerks und der Hierarchietiefe des Funknetzwerks.

Ggf. kann die Anzahl der in dem Verfahren vorgesehenen Zeitschlitze in einem Zeitschlitzblock gerade der maximal möglichen Anzahl der Knoten in einem Funknetzwerk, bspw. vorgegeben durch die gerätetechnische Auslegung, entsprechen. Dann können alle Geräte für alle Netzwerke gleich aufgebaut sein, wobei bei Funknetzwerken mit entsprechend weniger Teilnehmern als der maximalen Teilnehmerzahl jeweils nur ein Teil der Zeitschlitze belegt ist.

Natürlich wäre es auch denkbar, die Geräte jeweils installationsspezifisch mit einer vorgegebenen Anzahl von Zeitschlitzen zu konfigurieren.

Gemäß einer erfindungsgemäß bevorzugten Ausgestaltung des vorgeschlagenen Verfahrens kann den Knoten hierarchieebenenweise aufsteigend und/oder zweigweise aufsteigend eine höhere Knotennummer zugewiesen werden, um die erfindungsgemäß vorgeschlagene Reihenfolge der den Zeitschlitzen zugeordneten Knoten bzw. Knotennummern auf einfache Weise erreichen zu können.

Hierarchieebenenweise aufsteigend bedeutet, dass die Sortierung der Knoten entsprechend der Hierarchieebenen erfolgt, wobei Knoten in derselben Hierarchieebene nacheinander sortiert werden. Die Sortierung der Knoten in einer Hierarchieebene kann dabei zufällig erfolgen, bspw. entsprechend der Reihenfolge von in dem Funknetzwerk oder in größeren Einheiten, bspw. auch für alle produzierten Geräte, eindeutigen Geräteidentifikationsnummern. Ein Vorteil der hierarchieebenenweisen Sortierung der einzelnen Knoten entsprechend ihrer Knotennummern liegt darin, dass ggf. für jeden Knoten eine gewisse Verarbeitungszeit für den empfangenden Knoten bis zur Wiederaussendung der Daten durch denselben Knoten zur Verfügung steht, da die Daten immer an eine nachgeordnete Hierarchieebene gesendet werden und der Zeitschlitz für die nachgeordnete Hierarchieebene nicht unmittelbar auf den Empfangszeitschlitz für die aktuelle Hierarchieebene erfolgt, wenn in der vorgegebenen Hierarchieebene mehrere Datensammler zur Verfügung stehen. Sofern die Verarbeitungszeit bspw. mindestens einen Zeitschlitz beträgt, wäre es erfindungsgemäß auch möglich, unabhängig von der hierarchieebenenweisen oder zweigweisen Sortierung nach jedem letzten Datenknoten einer Hierarchieebene einen Pausenzeitschlitz oder eine benötigte Anzahl von Pausenzeitschlitzen einzufügen, um die benötigte Bearbeitungszeit sicherzustellen.

Entsprechend bedeutet eine zweigweise aufsteigende Zuweisung der Knotennummern, dass die Sortierung entlang eines von dem Zentralknoten ausgehenden Asts bzw. Zweigs erfolgt, wobei später erfolgende Verästelungen des Asts nacheinander sortiert werden. Für die später erfolgenden Verästelungen können diese Verästelungen ausgehend von den hierarchieranghöheren oder hierarchierangniedrigeren Verästelungen abgearbeitet werden. Die zweigweise aufsteigende Sortierung hat den Vorteil, dass die Weiterleitung der Daten innerhalb eines Astes schneller geht als bei der hierarchieebenenweisen Sortierung, insbesondere für einen Knoten, bei dem die Verarbeitungszeit bis zur Wiederaussendung von einem bis zum nächsten Zeitschlitz in dem Zeitschlitzblock ausreichend ist.

Erfindungsgemäß sind auch Kombinationen der beiden vorerwähnten Sortierungen möglich. Sowohl bei einer Kombination als auch bei jeweils nur einer angewendeten Sortierung kann es ferner sinnvoll sein, knotenreiche Äste und Unteräste, bspw. in absteigender Sortierung der Anzahl der in dem Ast enthaltenen Knoten, abzuarbeiten. Ein weiteres Kriterium kann eine aus dem Betrieb abgeleitete Häufigkeitsverteilung sein, mit der bestimmte Äste senden und/oder empfangen. Durch eine derartige Sortierung kann eine besonders hohe Wahrscheinlichkeit für eine schnelle Datenübertragung der wichtigsten Daten erreicht werden.

Gemäß einer weiteren, bevorzugten Ausführungsform der vorliegenden Erfindung werden ein Aufwärts-Zeitschlitzblock für die Aufwärtskommunikation und ein Abwärts-Zeitschlitzblock für die Abwärtskommunikation definiert, die im zeitlichen Wechsel unmittelbar oder auch mit weiteren Zeitschlitzblöcken, wie Pausen-Zeitschlitzblöcken (auch nur Pausenblöcke genannt) oder mehreren, nacheinander angeordneten Aufwärts- oder Abwärtszeitschlitzblöcken, angewendet werden. Grundsätzlich ist es mit derartigen Zeitschlitzblöcken möglich, in einem Takt von nur zwei Zeitschlitzblöcken in Aufwärtsrichtung bzw. Abwärtsrichtung zu kommunizieren, wenn nach jedem Block ein Wechsel stattfindet. In einem solchen Zeitschema können in einer weiteren Erfindungsvariante Aspekte der Funkzulassung berücksichtigt werden. Häufig arbeiten dem erfindungsgemäßen Funknetzwerk vergleichbare Funknetzwerke, insbesondere Verbrauchserfassungs- und/oder Sensornetzwerke, in lizenzfreien Frequenzbändern, in denen der erlaubte Duty-Cycle die Aussendungen der an einem Funknetzwerk teilnehmenden Geräte bspw. auf 10 % der insgesamt zur Verfügung stehenden Zeit begrenzt. Daneben müssen zwischen den Aussendungen auch Mindestpausen von bspw. 3,6 Sekunden eingehalten werden. Dies ist erfindungsgemäß auf einfacher Weise möglich, wenn anstelle eines unmittelbaren zeitlichen Wechsels von Aufwärts- und Abwärts-Zeitschlitzblöcken geeignete Pausenzeitschlitzblöcke eingefügt werden, während deren Dauer in dem gesamten Funknetzwerk keine Kommunikation stattfindet. Erfindungsgemäß ist es auch möglich, mehrere verschiedene Aufwärts-Zeitschlitzblöcke und/oder Abwärts-Zeitschlitzblöcke zu definieren, die nach vorgegebenen Kriterien wechselnd verwendet werden. Sinnvoll insbesondere für die Aufwärtskommunikation sind verschiedene Zeitschlitzblöcke je nach den in einem Datentelegramm angegebenen Adressaten, d.h. bspw. einer angegebenen Knotennummer des zu erreichenden Knotens. Hierdurch lässt sich eine gezielte Kommunikation hin zu einem Adressaten erreichen. Die Kriterien für die Auswahl der verschiedenen Aufwärts- bzw. Abwärtszeitschlitzblöcke können in allen Knoten bekannt sein und entsprechend angewendet werden.

In einer bevorzugten Weiterentwicklung des erfindungsgemäßen Verfahrens können auch eine Mehrzahl von Zeitschlitzblöcken, insbesondere die vorbeschriebenen Aufwärts- und Abwärtszeitschlitzblöcke sowie ggf. Pausenblöcke, in einer vorgegebenen Anordnung in einem Zeitsegment zusammengefasst werden, wobei ein Zeitsegment oder mehrere verschiedene Zeitsegmente bei der Übertragung von Daten bspw. zyklisch nacheinander abgearbeitet werden können. Zwischen der Abarbeitung von Zeitsegmenten kein ferner eine Pause netzwerkindividueller Länge eingefügt werden, um Dauerkollisionen mit benachbarten Funknetzwerk innerhalb des Funkbereichs zu vermeiden. Bspw. können etwa 200 Zeitschlitzblöcke zu einem Zeitsegment zusammengefasst sein. Ferner können, natürlich unabhängig von der bevorzugten Anzahl von Zeitschlitzblöcken in einem Zeitsegment, alle Blöcke, d.h. alle verschiedenen Zeitschlitzblöcke sowie die Pausenblöcke erfindungsgemäß die gleiche Länge aufweisen. Dies hat den Vorteil, dass die einzelnen Blöcke, seien es Zeitschlitzblöcke oder Pausenblöcke, innerhalb des Zeitsegments frei austauschbar sind.

Ferner können ein erster Zeitschlitzblock des Zeitsegments oder mehrere erste Zeitschlitzblöcke eines Zeitsegments als Aufwärts-Zeitschlitzblöcke ausgebildet und für Synchronisations-Datenpakete reserviert sein.

In Weiterbildung dieses vorbeschriebenen Merkmals der Zeitsegmente kann es erfindungsgemäß von Vorteil sein, die Anordnung von Aufwärts- und Abwärtszeitschlitzblöcken sowie ggf. Pausenblöcken in einem Zeitsegment durch ein Segmentprofil festzulegen, wobei eine Segmentprofilkennung des Segmentprofils und/oder das vollständige Segmentprofil vorzugsweise durch den Zentralknoten an andere, vorzugsweise alle, Knoten im Funknetzwerk übertragen wird. Segmentprofile und Segmentprofilkennungen können auch bei während der Herstellung der Knoten bei einer Grundkonfiguration übertragen werden, so dass diese auch bei der Inbetriebnahme schon zur Verfügung stehen.

Nach Empfangen der Segmentprofilkennung wendet ein Knoten diese durch das Segmentprofil vorgegebene Anordnung der verschiedenen Arten von Zeitschlitzblöcken an. Eine derartige Organisation kann insbesondere dann reibungslos funktionieren, wenn erfindungsgemäß die Länge eines Zeitsegments in dem Funknetz fest definiert ist und/oder zumindest im laufenden Betrieb nicht geändert wird bzw. änderbar ist. Dann bleibt der zeitliche Kommunikationsrahmen gleich. Lediglich der Inhalt in diesem zeitlichen Kommunikationsrahmen, d.h. die Anordnung der verschiedenen Zeitschlitzblöcke, wechselt. Von Vorteil ist auch hier insbesondere, wenn alle Zeitschlitz- und Pausenblöcke die gleiche Länge aufweisen.

Erfindungsgemäß bevorzugt sind verschiedene Segmentprofile mit der zugehörigen Segmentprofilkennung bereits in den Knoten des Funknetzwerks gespeichert. Dies ermöglicht eine einfache und flexible Anpassung an verschiedene Anforderungen der Übertragung einzelner Daten in dem Funknetzwerk, bspw. die Realisierung von Tag-Nacht-Profilen, Inbetriebnahme- oder Updateprofilen, der Ablesung von Daten, Passiv-Segmenten usw.. Für die Ablesung von Datensätzen aus Knoten kann ein entsprechendes Segmentprofil bspw. so aussehen, dass einem oder wenigen Aufwärts-Zeitschlitzblöcken, die für die Ermittlung einer qualifizierten Datenanfrage vorgesehen sind, viele Abwärts-Zeitschlitzblöcke für die Übermittlung der angefragten Daten folgen, welche aus mehreren einzelnen Datenpaketen bestehen. Innerhalb dieses Segmentprofils können auch mehrere Paare aus solchen Aufwärts- und Abwärtsblockbereichen vorgesehen werden, damit ggf. durch Störungen verloren gegangene Daten in demselben Zeitsegment erneut angefragt und wiederholt übertragen werden können.

Ein weiteres denkbares Segmentprofil, das zum Übermitteln von Konfigurationsdaten und/oder eines Software-Updates von dem Zentralknoten an die übrigen Knoten dient, kann bspw. aus Aufwärts-Zeitschlitzblöcken bestehen, die ausreichend Kapazität für viele Datenpakete zur Verfügung stellen. Am Ende eines solchen Segmentprofils kann dann noch ein relativ kurzer Abwärts-Zeitschlitzblock für Quittierungs-Datenpakete der Knoten an dem Zentralknoten vorgesehen werden, um bspw. ein erfolgreiches Update oder einen erfolgreichen Empfang der Update-Daten zu melden.

Auch ist ein Segmentprofil denkbar, das nach dem oder den Aufwärts-Zeitschlitzblöcken für das oder die Synchronisierungs-Datenpakete nur aus Passivblöcken besteht. Ein solches Zeitsegmentprofil dient in Zeiten ohne Netzwerk-Kommunikationsbedarf der energieeffizienten Aufrechterhaltung der Netzsynchronität ohne weitere Aktivitäten.

Natürlich sind je nach applikativem Kommunikationsbedarf weitere Segmentprofile möglich oder sinnvoll.

Zur Auswahl eines solchen Segmentprofils kann erfindungsgemäß vorgesehen sein, dass die Segmentprofilkennung in einem bzw. dem Synchronisationstelegramm, welches zu Anfang eines Segmentprofils weitergeleitet wird, mit übertragen wird. Das Synchronisationstelegramm steht dabei erfindungsgemäß vorzugsweise am Anfang des Zeitsegments, so dass das ausgewählte Segmentprofil dann nach dem Empfang des Segmentprofilkennung aktiviert wird und Gültigkeit bis zum Rest dieses Zeitsegments hat.

Alternativ oder zusätzlich besteht natürlich auch die Möglichkeit, das Segmentprofil ggf. zu Beginn des Zeitsegments, also bspw. nach dem oder den Synchronisations-Datenpaket(en), als eigenständigen Datensatz vollständig zu übertragen. Nachteilig ist hierbei zwar der höhere Kommunikationsbedarf. Ein solches Vorgehen erhöht aber auch die Flexibilität der Anwendung verschiedener Segmentprofile, so dass vorzugsweise eine Mischung beider Verfahren zum Einsatz kommt und im Falle eines neuen, noch nicht angewendeten Segmentprofils das gesamte Segmentprofil als eigenständiger Datensatz bzw. Datenpaket übertragen wird. In einem solchen Datensatz kann dann auch eine neue, bisher noch nicht verwendete, Segmentprofilkennung mit übertragen werden, so dass das als Datensatz neu übertragen Segmentprofil in jedem Knoten mit der entsprechenden Segmentprofilkennung abgelegt und später durch einfache Übertagung der Segmentprofilkennung aufgerufen werden kann.

Erfindungsgemäß ist es ferner möglich, dass ein Knoten in dem Funknetzwerk ein individuelles Segmentprofil verwendet. Auch diese Segmentprofile können mittels einer Segmentprofilkennung oder durch Übertragen des gesamten Segmentprofils in analoger Weise aktiviert werden. Hierdurch ist es bspw. möglich, eine besonders schnelle und energieeffiziente Durchleitung von Daten durch das Funknetzwerk zu erreichen, wenn ein in einer höheren Hierarchieebene angeordneter Knoten ein für ihn optimales Zeitschlitzschema verwendet, um in seinem Ast nachgeordnete Knoten anzusprechen. Durch diese Art der Zeiteinteilung kann auch der Bedarf an Zwischenspeicherungen für die durchleitenden Knoten, d.h. die eine Router-Funktion ausübenden Knoten, auf ein Datenpaket minimiert werden.

In einer Erfindungsvariante kann ein Knoten aus einem globalen, für das gesamte Funknetzwerk gültigen Segmentprofil, in dem bestimmte Bereiche von Zeitschlitzblöcken für eine Kommunikationsrichtung, bspw. die Abwärtskommunikation oder die Aufwärtskommunikation, netzwerkweit vorgesehen sind, und aus der ihm bekannten, bspw. durch den Zentralknoten bekannt gemachten, Netzwerktopologie sein individuelles Segmentprofil selbständig nach vorgegebenen Regeln ermitteln. Dabei berücksichtigt der Knoten, dass in seinem Topologiezweig des Funknetzwerks weitere Knoten angeordnet sind, mit denen er sich die Zeitschlitzblöcke des Blockbereichs für die eine Kommunikationsrichtung teilen muss. Hierdurch kann er ermitteln, wann er - je nach Kommunikationsrichtung - eigene Daten senden oder Daten der anderen Knoten empfangen muss bzw. wann er als Router zur Weiterleitung von Daten (empfangen und wieder Aussenden von Daten) agieren muss. Durch in dem Funknetzwerk vorzugsweise einheitlich, d.h. für alle Knoten gleichermaßen anzuwendende, vorgegebene Regeln können die Knoten so jeweils ihre individuellen Segmentprofile aus global vorgegebenen Segmentprofilen, die ggf. jeweils für einen bestimmten Zweck (Verbrauchsdatenübertragung, Update, usw.) vorgesehen sind können und die vorzugsweise nur die Zeitschlitzblöcke für die jeweiligen Kommunikationsrichtungen definieren, selbst erstellen.

Falls ein Knoten keine Segmentprofilkennung für das in dem aktuellen Zeitsegment zu verwendende Segmentprofil erhält, kann der Knoten erfindungsgemäß ein Segmentprofil anwenden, das ggf. nach den Zeitschlitzen für die Synchronisations-Datenpakte, die mit einer bevorzugten Erfindungsvariante, wie sie vorstehend geschildert wurde, durch das Segmentprofil gar nicht beeinflusst werden, ausschließlich aus Passivblöcken (auch Pausenblöcke genannt) besteht, sofern er in dem Synchronisations-Datenpaket oder sonst dafür vorgesehenen Zeitschlitzblöcken kein Zeitsegmentprofil zugewiesen bekommen hat, sei es durch Übertragung der Segmentprofilkennung oder des Segmentprofils als Datenpaket selbst.

Im Rahmen dieser Passivblöcke findet keine Kommunikation dieses Knotens und seiner hinter ihm in rangniedrigeren Hierarchieebenen liegenden Kindknoten mit dem übrigen Funknetzwerk statt, so dass es auch zu keiner Störung des übrigen Funkverkehrs durch Verwendung eines falschen Segmentprofils in diesem Knoten kommt. Im nächsten Segmentprofil erhält dieser durch Passivblöcke in dem Segmentprofil von dem Funknetzwerk ausgeschlossene Knoten erneut ein Synchronisations-Datenpaket und die Zuweisung des Segmentprofils, so dass er dann an der Kommunikation wieder teilnehmen kann. Als Grund für das Nichterhalten der Zuweisung können in der Praxis immer wieder vorkommende Störungen des Funkkanals, bspw. durch mit anderen, dem Funknetzwerk nicht angehörenden Funkteilnehmern auf dem lizenzfreien Funkband, in Frage kommen, die mit einer sehr großen Wahrscheinlichkeit jedoch zufällig und nicht zyklisch wiederkehrend sind, so dass dieses Problem in dem nächsten Zeitsegment nicht mehr bestehen sollte.

Erfindungsgemäß können alle oder ausgewählte Daten in dem Funknetzwerk durch den sendenden Knoten auch mehrfach gesendet werden, wobei erfindungsgemäß bevorzugt eine sechs- bis achtmalige Aussendung vorgesehen sein kann, um die Zuverlässigkeit der Datenübertragung auch ohne erneute Datenanforderungen erheblich zu erhöhen. Ein derartiges Vorgehen der Mehrfachaussendung ist in Zeitschlitz-Sendeverfahren eigentlich unüblich, da im Gegensatz zu unidirektionalen Sendeverfahren außerhalb definierter Zeitschlitze innerhalb des Funknetzwerks eigentlich keine Kollisionen auftreten. Dennoch kommt es aufgrund der Verwendung lizenzfreier Datenbänder immer wieder zu derartigen Kollisionen aus anderen Installationen im Sende- und Empfangsbereich.

Die Mehrfachaussendungen können erfindungsgemäß auf die Auswahl besonders wichtiger Daten beschränkt werden, bspw. die Synchronisations-Datenpakete und ggf. auch die Zuweisung des Segmentprofils, d.h. bspw. die Übertragung einer außerhalb des Synchronisations-Datenpakets übertragenen Segmentprofilkennung bzw. eines gesamten außerhalb des Synchronisations-Datenpakets übertragenen Segmentprofils. Ferner kann eine derartige Wiederholung für inhaltlich wichtige Daten erfolgen.

Nachteilig bei der Mehrfachaussendung ist jedoch eine deutliche Erhöhung des Ladungsverbrauchs, was bei batteriebetriebenen Knoten kritisch sein kann, zumal diese multiple Aussendung dann regelmäßig in jedem Zeitsegment ansteht. In einer besonders bevorzugten Ausführungsvariante dieses Merkmals ist daher vorgesehen, dass der sendende Knoten bei Daten, die mehrfach auszusenden sind, überprüft, ob diese Daten von den oder dem in Kommunikationsrichtung vorzugsweise unmittelbar nachgeordneten Knoten, d.h. je nach Kommunikationsrichtung dem Kindknoten in der Aufwärtskommunikation oder dem Elternknoten in der Abwärtskommunikation, wiederausgesendet werden. Dazu wird erfindungsgemäß vorgeschlagen, dass der sendende Knoten ein Empfangszeitfenster zu dem Zeitpunkt öffnet, zu dem der nachgeordnete Knoten oder die nachgeordneten Knoten die Daten zur Weiterleitung im Rahmen seiner Routerfunktion wiederaussendet, wobei die Mehrfachaussendung der Daten dann abgebrochen wird, wenn der sendende Knoten die durch den nachgeordneten oder die nachgeordneten Knoten ausgesendeten Daten empfängt. Die vorbeschriebenen, mehrfach auszusendenden Daten können erfindungsgemäß alle Daten, aber auch bspw. nur durch vorgegebene Kriterien ausgewählte Daten sein.

Bei diesem Verfahren geht der sendende Knoten vorzugsweise bei allen ihm unmittelbar nachgeordneten Knoten, d.h. in deren ihm aus dem Zeitschlitzblock bekannten Sendezeitschlitzen, auf Empfang. Ein unmittelbar nachgeordneter Knoten soll in diesem Zusammenhang ein Knoten in der sich in Kommunikationsrichtung unmittelbar anschließenden Hierarchieebene sein, der die Daten empfangen soll. Es kann je nach Art der Daten einen unmittelbar nachgeordneten Knoten oder mehrere unmittelbar nachgeordnete Knoten geben. In der Direktkommunikation zu einem Knoten gibt es jeweils nur einen unmittelbar nachgeordneten Knoten. Dies gilt in der Abwärtskommunikation von einem Knoten hin zu dem Zentralknoten meist immer. Bei einer Broadcast-Kommunikation, bspw. von Synchronisationsdaten oder Daten zur Zuweisung eines Segmentprofils, können alle in der nächstniedrigeren Hierarchieebene den sendenden Knoten nachgeordnete Knoten unmittelbar nachgeordnete Knoten sein. Bei einer Hierarchieebene mit Verästelung zu nachgeordneten Hierarchieebenen nächstniedrigeren Rangs liegen daher immer mehrere Knoten vor.

Wenn der sendende Knoten die Wiederaussendung der Daten durch die ihm nachgeordneten Knoten, welche die Daten ihrerseits wiederaussenden müssen, feststellt, kann der sendenden Knoten für den aktuellen Zeitschlitzblock oder den aktuellen Bereich mehrerer Zeitschlitzblöcke für diese Kommunikationsrichtung, der für die Weiterleitung genau dieser Daten reserviert ist, in dem aktuellen Zeitsegment seine Kommunikationsaktivitäten einstellen, da es aufgrund der Struktur der Datenkommunikation in diesem Zeitraum keine Daten mehr geben kann, die durch ihn weiter übertragen werden müssen.

Das erfindungsgemäß vorbeschriebene Prinzip kann als Prinzip der "hörenden Quittierung" bezeichnet werden, welches auch "Listen Acknowledge" genannt wird. Wenn der sendende Knoten eine derart hörende Quittierung nicht empfängt, sendet er im nächsten Zeitblock die Daten erneut aus, entweder bis er eine hörende Quittierung erhält oder bis der entsprechende Sendezeitschlitzblock bzw. Sende-Zeitschlitzblockbereich zu Ende ist. Damit erfolgt eine Wiederholung der Sendung nur im Bedarfsfall, so dass erfindungsgemäß auch im Fall von Mehrfachaussendungen nur ein geringer zusätzlicher Energiebedarf entsteht, wenn eine Übertragung wie vorgesehen erfolgreich ist, da nur zusätzliche Empfangsfenster in dem sendenden Gerät geöffnet werden müssen. Dies ist auch bei Langzeitanwendungen wie der Verbrauchsdatenerfassung in der Regel tolerierbar und ist im Rahmen des Energiemanagement handhabbar, insbesondere wenn man berücksichtigt, dass es zu einer Einsparung von Energiebedarf kommt, indem Nachfragen bei Nichtempfang erwarteter Daten vermieden werden können. Diese Nachfragen wären andernfalls aufgrund der immer unsicheren Funkverbindung nicht vermeidbar. Wie bereits erwähnt, ist dieses erfindungsgemäße Prinzip der hörenden Quittierung zur Steuerung von Mehrfachaussendungen neben Daten zur Organisation des Funknetzwerks, wie Synchronisationsdaten, Daten zur Zuordnung des Segmentprofils oder anderen, auch für inhaltliche Daten, d.h. bspw. Verbrauchs- und/oder Sensorwerte, geeignet.

In einer besonders einfachen Ausgestaltung der vorliegenden Erfindung kann durch Vorgabe einer bestimmten Anzahl von Zeitschlitzblöcken für eine Kommunikationsrichtung, d.h. Aufwärts- oder Abwärtszeitschlitzblöcken, die für eine bestimmte Art von Daten reserviert sind, die Anzahl der maximalen Wiederholungen der Daten vorgegeben werden. Erfindungsgemäß werden also bei dieser Ausführungsform des Verfahrens Blockbereiche aus mehreren Zeitschlitzblöcken für eine Kommunikationsrichtung gebildet, die für die Übertragung bestimmter Daten reserviert sind. Je nach Art der Daten sind dies Aufwärtsblockbereiche oder Abwärtsblockbereiche. Wiederholungen von Aussendungen finden dann einfacherweise statt, bis der jeweilige Blockbereich beendet ist, sofern nicht vorher in der vorstehend beschriebenen Weise eine hörende Quittierung erfolgreich stattgefunden hat. Die Länge des jeweils definierten Blockbereichs bemisst sich dabei an der gewünschten Zuverlässigkeit der Datenübertragung für die aktuell zu übertragenden Daten bzw. an der im Rahmen des Funknetzwerks für diese Daten zu tolerierenden Restauswahlwahrscheinlichkeit. Die Vorgabe hierfür kann dann einfacher Weise in dem Segmentprofil erfolgen, ohne dass gesonderte Informationen hierfür notwendig sind.

Die vorliegende Erfindung bezieht sich auch auf ein Gerät zur Teilnahme an der Kommunikation in einem hierarchisch gegliederten Funknetzwerk, wobei das Gerät in dem Funknetzwerk insbesondere die Funktion als Knoten oder Zentralknoten ausübt. Das Gerät ist mit einem Sender, einem Empfänger und einem Mikroprozessor ausgestattet, wobei der Mikroprozessor erfindungsgemäß zur Durchführung des vorbeschriebenen Verfahrens oder Teilen hiervon eingerichtet ist, wenn das Gerät in das Funknetzwerk integriert ist oder werden soll.

Entsprechend bezieht sich die Erfindung auch auf ein Funknetzwerk zur Übertagung von Daten, welches aus Geräten mit einem Sender, einem Empfänger und einem Mikroprozessor aufgebaut ist, wobei die Geräte dazu eingerichtet sind, Daten an andere Geräte in dem Funknetzwerk zu senden und/oder von anderen Geräten in dem Funknetzwerk zu empfangen. Erfindungsgemäß ist der Mikroprozessor von zumindest einem Teil der an dem Funknetzwerk teilnehmenden Geräte zur Durchführung des vorbeschriebenen Verfahrens oder Teilen hiervon eingerichtet.

Weitere Merkmale, Vorteile und Anwendungsmöglichkeiten der vorliegenden Erfindungen ergeben sich auch aus der nachfolgenden Beschreibung von Ausführungsbeispielen und der Zeichnung. Dabei bilden alle beschrieben und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: ein aus mehreren Knoten bestehendes erfindungsgemäßes Funknetzwerk mit einer hierarchieebenenweise aufsteigenden Zuweisung der Knotennummern;
- Fig. 2: das erfindungsgemäße Funknetzwerk gemäß Fig. 1 mit einer zweigweise aufsteigenden Zuweisung der Knotennummern;
- Fig. 3: eine Zuordnung der Knotennummern zu einem Zeitschlitz in einer Aufwärtskommunikationsrichtung für das Funknetzwerk gemäß Fig. 1;
- Fig. 4: eine Zuordnung der Knotennummern zu einem Zeitschlitz für die Abwärtskommunikationsrichtung für ein Funknetzwerk gemäß Fig. 1;
- Fig. 5: ein Abwärtsblockbereich in einem Segmentprofil für das Beispiel der Netzwerktopologie gemäß Fig. 1 und
- Fig. 6: ein Flussdiagramm zur Durchführung des erfindungsgemäßen Verfahrens gemäß einer besonders bevorzugten Ausführungsform.

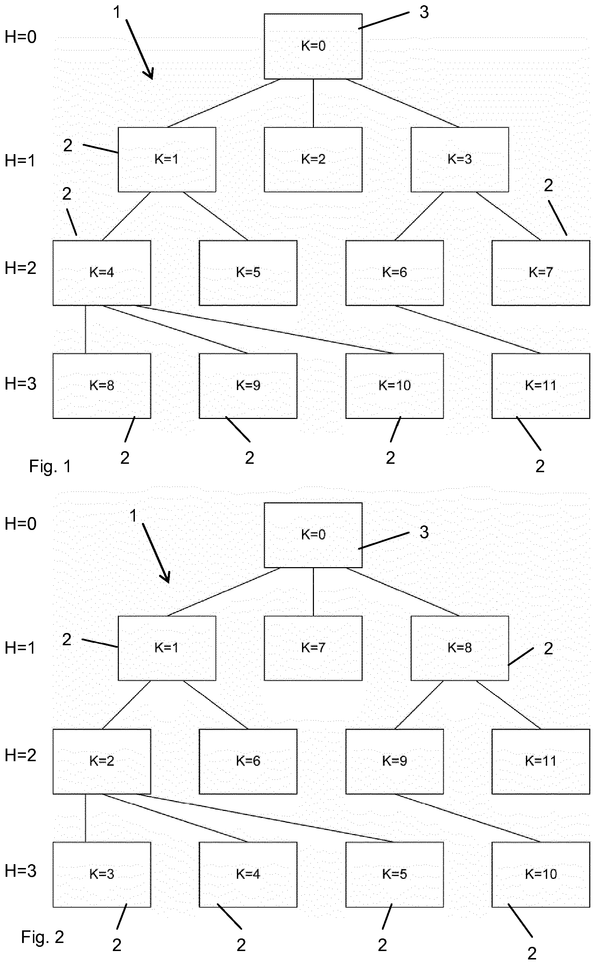

Fig. 1 zeigt die Netzwerktopologie eines Funknetzwerks 1, das aus mehreren Knoten 2 aufgebaut ist, von denen der Übersichtlichkeit halber nicht alle mit dem Bezugszeichen 2 versehen sind. Die Knoten 2 weisen jeweils Sender und Empfänger auf, um Daten entlang der durch Striche gekennzeichneten Linien zu anderen Knoten 2 bzw. einen an der Wurzel der als Baumstruktur dargestellten Hierarchie angeordneten zentralen Knoten 3 zu senden oder von diesen zu empfangen.

Bei dem dargestellten Funknetzwerk 1 handelt es sich insbesondere um ein hierarchisch gegliedertes Verbrauchserfassungs- und/oder Sensorfunknetzwerk 1, bei dem einzelne Verbrauchserfassungs- oder Sensorgeräte an Knoten 2 und ggf. auch den zentralen Knoten 3 angeschlossen sind. Die Daten der Verbrauchserfassungsgeräte und Sensoren, welche in Fig. 1 der Übersichtlichkeit halber nicht dargestellt sind, werden in dem Funknetzwerk über die einzelnen Knoten 2 hin zu dem zentralen Knoten 3 geleitet, wenn ein Verbrauchserfassungsgerät oder Sensor nicht unmittelbar an den zentralen Knoten 3 angeschlossen ist, d.h. mit diesem über eine kabelgebundene und drahtlose Kommunikationsverbindung in Verbindung steht.

In dem Funknetzwerk 1 werden also Daten über Knoten 2 des Funknetzwerks 1 zu dem auch als Zentralknoten 3 bezeichneten zentralen Knoten 3 übertragen. Umgekehrt können Daten von dem Zentralknoten 3 zu einem oder mehreren Knoten 2 sowie ggf. an die Knoten angeschlossene Verbrauchserfassungsgeräte oder Sensoren übertragen werden.

Das Funknetzwerk 1 ist in einer Baumtopologie aufgebaut, in welcher der Zentralknoten 3 die Wurzel im Sinne der ranghöchsten Hierarchieebene bildet, die als Hierarchieebene H=0 bezeichnet wird. Ferner ist jedem Knoten 2, 3 eine eindeutige Knotennummer K zugewiesen, über die ein Knoten 2, 3 in dem Netzwerk identifiziert werden kann.

Die nächste, rangniedrigere Hierarchieebene H=1 zeichnet sich durch Knoten 2 aus, die über eine Kommunikationsverbindung mit dem Zentralknoten 3 kommunizieren können. Die Knoten in der Hierarchieebene H=2 können über einen als Router funktionierenden Knoten 2 mit dem Zentralknoten 3 kommunizieren, wohingegen die Knoten der Hierarchieebene H=3 über zwei als Router funktionierende Knoten 2 mit dem Zentralknoten kommunizieren können. In Fig. 1 sind die verschiedenen Hierarchieebenen H=0 bis H=3 jeweils in einer horizontalen Ebene dargestellt. Die jeweiligen Knotennummern K sind in die Knoten 2, 3 eingetragen.

Die Kommunikation in dem Funknetzwerk 1 ist derart organisiert, dass jedem Knoten 2, 3, d.h. auch dem Zentralknoten 3, eine eindeutige Knotennummer zugeteilt ist und genau ein Zeitschlitz zum Senden von Daten in dem synchronisierten Funknetzwerk 1 vorgesehen ist. Ferner ist jedem Knoten 2 in dem dargestellten Beispiel genau ein Elternknoten 2 in einer ranghöheren Hierarchieebene, bspw. durch Mitteilen der Knotennummer, zugewiesen.

Die Zeitschlitze der Knoten 2, 3 sind in einem Zeitschlitzblock zusammengefasst, wobei sich der oder verschiedene Zeitschlitzblöcke mit der Zeit wiederholen, so dass immer wieder Zeitschlitze zur Verfügung stehen, in denen jeder Knoten 2 senden und Daten von einem bestimmten in seinem Empfangsbereich liegenden Knoten 2 empfangen kann. Um dieses feste Zeitschlitzschema einzuhalten, halten sich alle Knoten 2 des Funk- bzw. Datenübertragungsnetzwerks durch Empfang und Weiterleitung von Synchronisations-Datenpaketen synchron zu diesem Zeitschlitzschema. Die Synchronisations-Datenpakete werden über die Zeit zyklisch ausgesendet, bspw. alle 15 Minuten von dem Zentralknoten 3. Dadurch sind alle Knoten 2, 3 des Funknetzwerks 1 in der Lage, nur zu bestimmten Zeiten, nämlich in den für sie bestimmten bzw. relevanten Zeitschlitzen, zu senden bzw. gezielt Daten von einem anderen Knoten 2, 3 zu empfangen.

Dabei kann dem die Synchronisations-Datenpakete vorzugsweise verteilenden Zentralknoten 3 als Wurzel der Baumtopologie des hierarchischen Funknetzwerks 1 in der Regel auch die Kommunikationsinitiative zukommen. Insbesondere kann der Zentralknoten 3 nach vorgegebenen Regeln auch die Topologie des Funknetzwerks 1 bilden und die Zuordnung der einzelnen Knoten 2 verteilen. Dazu kann auch das Zuweisen einer Knotennummer K zu den jeweiligen Knoten 2, 3 gehören. Dies kann bei einer Aktualisierung der Netzwerktopologie durch den Zentralknoten 3 oder durch eine Parametrierung des Funknetzes 1, insbesondere bei der Inbetriebnahme, geschehen.

Erfindungsgemäß geschieht die Nummerierung der einzelnen Knoten 2, 3 so, dass jeder Knoten 2 immer eine höhere Knotennummer hat als sein Elternknoten 2, 3 in der Baumtopologie des Netzwerks, wobei der einem Knoten 2 zugewiesene Elternknoten 2, 3 immer genau ein Knoten in der nächsthöheren Hierarchieebene, d.h. der Hierarchieebene H mit der gemäß Fig. 1 oder 2 kleineren Nummer, hat. Dies ist in Fig. 1 dadurch gelöst, dass die einzelnen Knoten ausgehend von dem Zentralknoten 3 mit der Knotennummer K=0 hierarchieebenenweise aufsteigend durchnummeriert werden, d.h. die Knoten 2 der ersten Hierarchieebene H=0 werden zunächst nummeriert. Aufgrund der baumartigen Struktur mit der Wurzel in der ersten Hierarchieebene H=0 befindet sich dort nur der Zentralknoten 3 mit der Knotennummer K=0. In der nächstniedrigeren Hierarchieebene, d.h. der zweiten Hierarchieebene mit der Nummer H=1, befinden sich in dem in Fig. 1 dargestellten Beispiel drei Knoten 2, denen die Knotennummern K=1, K=2 und K=3 zugewiesen werden, wobei die Reihenfolge der Nummerierung innerhalb der Hierarchieebene H=1 beliebig ist.

Entsprechend erhalten die Knoten 2 in der dritten Hierarchieebene H=2 die Knotennummern K=4, K=5, K=6 und K=7. In der vierten und in dem dargestellten Beispiel letzten Hierarchieebene H=3 erhalten die Knoten die Knotennummern K=8, K=9, K=10 und K=11.

Eine alternative Möglichkeit der Zuordnung der einzelnen Knotennummern K zu den Hierarchieebenen H für das ansonsten gleich aufgebaute Funknetzwerk 1 mit derselben Topologie ist in Fig. 2 dargestellt. Anstelle der hierarchieebenenweise aufsteigenden Zuweisung findet hier eine zweigweise aufsteigende Zuweisung der Knotennummern K an die einzelnen Knoten 2, 3 in dem Netzwerk statt. Als erster Ast wurde bei dem in Fig. 2 dargestellten Beispiel der linke von dem Zentralknoten 3 ausgehende Ast ausgewählt. Dem ersten Konten 2 nach dem Zentralknoten 3 in diesem Ast wird die Knotennummer K=1 zugewiesen. In dem von diesem Knoten 2 mit der Knotennummer K=1 ausgehenden linken Ast wurde in der Hierarchieebene H=2 dem nachfolgenden Knoten 2 die Knotennummer K=2 zugewiesen. In der nachfolgenden vierten Hierarchieebene H=3 erhielt der entsprechende Knoten mit dem linken Ast die Knotennummer K=3. Dieser Knoten 2 mit der Knotennummer K=3 ist der letzte Knoten 2 in diesem Ast. Daher wird nun ausgehend von dem Knoten 2 mit der Knotennummer K=2 in der nächst höheren Hierarchieebene der nächstlinke Ast abgearbeitet. Dieser führt zu dem Knoten 2, dem die Knotennummer K=4 zugewiesen wird. Die weitere Zuweisung der verschiedenen Knoten erfolgt nach demselben Prinzip und führt zu der in Fig. 2 dargestellten Struktur.

Als Folge dieser Arten der Nummerierung ist also sichergestellt, dass jeder Knoten 2 eine höhere Knotennummer K als sein Elternknoten 2 aufweist.

Bei der Konfiguration des Funknetzwerks erhält jeder Knoten 2 außer seiner eigenen Knotennummer K auch noch die Knotennummer K seines Elternknotens 2 in der nächsten ranghöheren Hierarchieebene und die Knotennummern Kseiner Kindknoten in den nachfolgenden rangniedrigeren Hierarchieebenen mitgeteilt, die über den Knoten 2 mit dem Zentralknoten 3 kommunizieren. Damit kennt jeder Knoten 2 sowohl den nächsten von ihm in Abwärtskommunikationsrichtung anzusprechenden Elternknoten 2, um Daten zu dem Zentralknoten 3 zu übertragen, als auch die Knoten 3 seiner Kinder und Kindeskinder, die anzusprechen sind, wenn der Knoten 2 von dem Zentralknoten 3 zu übertragene Daten in der Aufwärtskommunikation weiterzuleiten hat.

Diese Informationen können bspw. in verschiedenen Routertabellen in den Knoten 2 abgelegt sein. Die verschiedenen Zeitschlitze, in denen jeder Knoten 2, 3 kommunizieren kann, bilden ein Zeitschlitzschema, in dem eine Anzahl von aufeinanderfolgenden Zeitschlitzen zu Zeitschlitzblöcken zusammengefasst ist. Die Anzahl der Zeitschlitze pro Zeitschlitzblock entspricht mindestens der in dem aktuellen Funknetzwerk vorhandenen Anzahl der Knoten 2, 3, vorzugsweise aber der maximal möglichen Anzahl der Knoten 2 in einem Funknetzwerk 1, das sich gerätetechnisch umsetzen lässt.

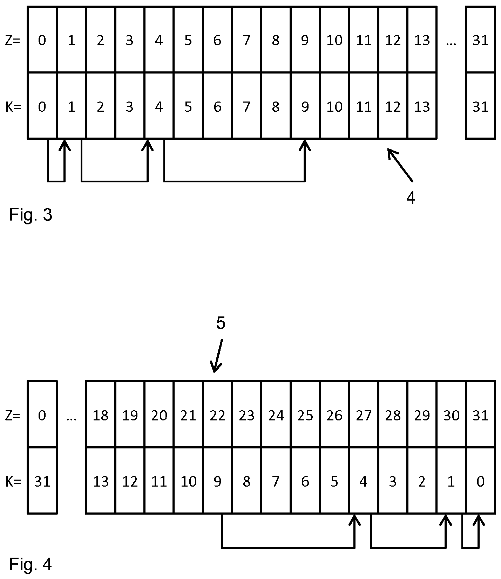

Bspw. ist jeder Zeitschlitz 125 ms lang und es werden 32 Zeitschlitze zu einem Zeitschlitzblock zusammengefasst, der somit insgesamt 4 s lang ist. Bei dieser beispielhaften Auslegung können im Netzwerk bis zu 32 Knoten 2, inklusive dem Zentralknoten 3, teilnehmen. Die Zeitschlitze werden, wie in Fig. 3 dargestellt, innerhalb des Zeitschlitzblockes mit Zeitschlitznummern durchnummeriert, im Beispiel also von 0 bis 31. Jeder Knoten 2, 3 hat pro Zeitschlitzblock genau einen Zeitschlitz, in dem er senden darf. Erfindungsgemäß ist die Zuordnung der Zeitschlitznummer Z zur Knotennummer K von der Kommunikationsrichtung abhängig.

In Fig. 3 ist ein Zeitschlitzblock 4 mit 32 Zeitschlitzen Z=0 bis Z=31 dargestellt, in denen die Kommunikationsrichtung von dem Zentralknoten 3 mit der Knotennummer K=0 zu einem anderen Knoten 2 mit höherer Knotennummer K verläuft. In dieser Aufwärtskommunikationsrichtung von dem Zentralknoten 3 zu einem Knoten 2 ist ein Knoten 2 mit einer höheren Knotennummer K einem in dem Zeitschlitzblock zeitlich später angeordneten Zeitschlitz Z zugeordnet. Es wird also ein Knoten 2 mit der Knotennummer K einem Zeitschlitz mit der entsprechenden Zeitschlitznummer Z zugeordnet.

In der Abwärtskommunikationsrichtung, für welche ein Zeitschlitzblock in Fig. 4 dargestellt ist und für welche die Kommunikation von einem Knoten 2 im Funknetzwerk 1 zu dem Zentralknoten 3 verläuft, wird dem Knoten 2 mit der Knotennummer K der Zeitschlitz Z=Kₘₐₓ-K zugeordnet.

Bei der maximalen Knotennummer K=31 hat also der Knoten K=9 in der Aufwärtskommunikationsrichtung den Zeitschlitz Z=9 zugeordnet. In der Abwärtskommunikationsrichtung hat er hingegen den Zeitschlitz Z = 31-9 = 22 zugeordnet. Innerhalb eines Zeitschlitzblocks ist also die Reihenfolge der den Zeitschlitzen Z zugeordneten Knoten 2 mit ihren Knotennummern K bei Auf- und Abwärtskommunikationsrichtung jeweils umgekehrt.

Bei der in Fig. 1 dargestellten Beispiel-Netzwerktopologie verläuft also eine Aufwärtskommunikation von dem Zentralknoten 3 mit der Knotennummer K=0 zu den Knoten 2 mit der Knotennummer K=9 folgendermaßen ab, wie in Fig. 3 durch die Pfeile angedeutet:
Knoten K=0 sendet im Zeitschlitz Z=0 und Knoten K=1 empfängt die Nachricht. Er erkennt, dass die Nachricht für den Knoten K=9 bestimmt ist. Da sich der Knoten K=9 in seiner Routertabelle der Kinderknoten findet, sendet er die Nachricht in dem ihm zugeordneten Zeitschlitz Z=1 weiter. Diese Nachricht wird von dem Knoten K=4 empfangen, welcher den Knoten K=9 wiederrum in seiner Routertabelle der Kinderknoten findet und die Nachricht folglich in seinem ihm zugeordneten Zeitschlitz Z=4 erneut aussendet. Diese Nachricht wird schließlich von dem Knoten K=9 empfangen.

Der gesamte Weg der Nachricht durch die verschiedenen Hierarchieebenen H des Netzwerks 1 wird also innerhalb eines Zeitschlitzblocks mit den Zeitschlitzen Z=0 bis Z=31 zurückgelegt. Dies gilt aufgrund der erfindungsgemäßen Zuordnung der Zeitschlitze Z innerhalb des Zeitschlitzblocks zu den Knotennummern K für jede Übertragung von dem Zentralknoten 3 zu einem beliebigen Knoten 2 mit den Knotennummern K=1 bis K=11 gemäß Fig. 1.

In demselben Beispiel-Funknetz läuft eine Abwärtskommunikation von dem Knoten 2 mit der Knotennummer K=9 zu dem Zentralknoten 3 mit der Knotennummer K=0 wie folgt ab (vgl. auch Fig. 4). Der Knoten mit der Knotennummer K=9 sendet eine Nachricht in dem ihm zugeordneten Zeitschlitz Z=22. Der Knoten 2 mit der Knotennummer K=4 empfängt diese Nachricht und sendet sie in seinem Zeitschlitz Z=27 weiter. Diese Nachricht wird von dem Elternknoten mit der Knotennummer K=1 empfangen und in dessen Zeitschlitz Z=13 weitergesendet, um schließlich von dem Zentralknoten 3 mit der Knotennummer K=0 empfangen zu werden. Auch in dieser Abwärtskommunikationsrichtung hat also die Nachricht sämtliche Hierarchieebenen des gesamten Funknetzwerks 1 innerhalb eines Zeitschlitzblocks 5 durchquert.

Das vorgestellte Zeitschlitzschema mit der verschiedenen Zuordnung der Zeitschlitze Z zu den Knotennummern K funktioniert analog mit jedem der bis zu 32 Knoten 2, 3. Für jeden Knoten 2, 3 ist also eine Kommunikation durch das gesamte Funknetzwerk 1 von der niedrigsten bis zur höchsten bzw. von der höchsten bis zur niedrigsten Hierarchieebene innerhalb eines Zeitschlitzblocks 4, 5 möglich.

Damit dieser effiziente Transportmechanismus funktionieren kann, muss in dem Zeitschema festgelegt werden, welche Zeitschlitzblöcke 4, 5 in welcher Richtung (aufwärts oder abwärts) vorgesehen sind. In einer einfachen Variante der Erfindung wechseln die Zeitschlitzblöcke 4 für die Aufwärtskommunikation mit den Zeitschlitzblöcken 5 für die Abwärtskommunikation ab.

In einem solchen Zeitschema besteht in der vorbeschriebenen Beispielauslegung jeweils alle 8 s eine Möglichkeit in Aufwärts- bzw. Abwärtskommunikationsrichtung zu kommunizieren. Dadurch sind auch bei gestörten Funkstrecken schnelle Wiederholungsanfragen möglich. Ferner kann vorgesehen sein, bspw. alle 200 Zeitschlitzblöcke, in der Beispielauslegung also alle 800 Sekunden, einen Aufwärtszeitschlitzblock 4 für die Verteilung von Synchronisations-Datenpaketen zu reservieren, die von dem Zentralknoten 3 ausgesendet und von allen Datenknoten empfangen werden müssen, um die Synchronisation des Funknetzwerks 1 aufrechterhalten zu können.

Anstelle dieses besonders einfachen Zeitschemas mit alternierenden Auf- und Abwärtszeitschlitzblöcken 4, 5 können auch Aspekte einer Funkzulassung berücksichtigt werden.

Bei dem Funknetzwerk 1 kann es sich um ein Funknetzwerk innerhalb eines Gebäudes handeln, bei dem Verbrauchserfassungsdaten und/oder Sensordaten an einer Zentralstelle, einem als Zentralknoten 3 dienenden zentralen Masterdatensammler, gesammelt werden sollen. Diese Daten werden durch als normale Datensammler ausgebildete Knoten 2 des Funknetzwerks 1 weitergeleitet und zu dem Masterdatensammler 3 transportiert. Dabei sind den einzelnen Datensammlern 2 und ggf. auch dem Masterdatensammler 3 auch in den Fig. 1 und 2 nicht dargestellte Verbrauchserfassungsgeräte, bspw. Heizkostenverteiler, und/oder Sensoren, bspw. Temperatursensoren, Feuchtesensoren oder dergleichen, zugewiesen, die Sensordaten erfassen, an denen ihnen zugewiesenen Datensammler 1 vorzugsweise per Funk, bspw. in einer unidirektionalen Funkverbindung übertragen, vorauf hin der Datensammler 2 diese Daten in dem in Fig. 1 oder 2 dargestellten Funknetzwerk 1 hin zu dem Masterdatensammler 3 überträgt.

Derartige Anwendungen arbeiten typischerweise in lizenzfreien Frequenzbänder, in denen der Duty-Cycle der Aussendungen bspw. auf 10 % der maximal für Übertragungen zur Verfügung stehenden Zeit begrenzt ist. Ferner müssen zwischen den Aussendungen auch Mindestzeitpausen von mindestens 3,6 Sekunden eingehalten werden.

In der oben beschriebenen Auslegung würde z.B. der Knoten 2 mit der Knotennummer K=1 in einem Abwärtszeitschlitzblock 5 in Zeitschlitz 30 senden. Sofern in dem direkt anschließenden Aufwärtszeitschlitzblock 4 (vgl. Fig. 3) wieder eine Aussendung durch den Knoten 2 mit der Knotennummer K=1 ausgesendet werden müsste, würde zwischen den beiden für die Aussendung verwendeten Zeitschlitzen Z=30 in dem Abwärts-Zeitschlitzblock 5 und Z=1 in dem anschließenden Aufwärts-Zeitschlitzblock 4 nur zwei Zeitschlitze à 125 ms, also insgesamt 250 ms, liegen, was die zulassungsgemäße Mindestpause zwischen zwei Aussendungen von 3,6 s deutlich unterschreiten würde. Deswegen kann erfindungsgemäß jeder zweite Zeitschlitzblock kommunikationsfrei als Pausenblock bzw. Passivblock gehalten werden, wodurch die Mindestpause von 3,6 s in jedem Fall eingehalten wird. Hierdurch ist allerdings nur mehr jeweils alle 16 s eine Auf- bzw. Abwärtskommunikation möglich.

In Fortbildung dieses Zeitschemas kann das Zeitschema in Zeitsegmente unterteilt sind, die bspw. jeweils 200 Zeitschlitzblöcke zusammenfassen. Der erste Zeitschlitzblock eines Zeitsegments kann dabei für die Verteilung der von dem Zentralknoten 3 ausgesendeten Synchronisations-Datenpakete vorgesehen sein. Außerdem kann zwischen den Zeitsegmenten jeweils eine Pause netzwerkindividueller Dauer eingefügt werden, um Dauerkollisionen mit benachbarten Funknetzwerken innerhalb des Funkbereichs, die nach demselben Prinzip aufgebaut sind, zu vermeiden.

Dabei kann der Zentralknoten 3 zu Beginn des Zeitsegments, insbesondere mit seinen Synchronisations-Datenpaketen, auch die Kennung eines Segmentprofils übertagen, das im Rest des aktuellen Zeitsegments gelten soll. Dieses Segmentprofil legt fest, welche Zeitschlitzblöcke 4, 5 im Zeitsegment jeweils für die Aufwärts- bzw. für die Abwärtskommunikation vorgesehen sind. Dabei kann zwischen Aufwärtszeitschlitzblöcken und Abwärtszeitschlitzblöcken bzw. Gruppen von Aufwärtszeitschlitzblöcken, die Aufwärtsblockbereiche bilden, und Gruppen von Zeitschlitzblöcken, die Abwärtsblockbereiche bilden, jeweils ein Passivblock bzw. Pausenblock vorgesehen sein, um ggf. die bereits erwähnten Zulassungsbestimmungen zur Mindestpause in lizenzfreien Funknetzwerken sicher einhalten zu können.

In den Knoten 2 sind voreingestellte Segmentprofile bspw. bei der Installation oder der Konfiguration vorgespeichert worden, die anwendungsbezogen mit Hilfe der in den Synchronisations-Datenpaketen enthaltenen Segmentprofilkennungen für das aktuelle Zeitsegment ausgewählt werden. So kann der Zentralknoten 3 je nach applikativem Kommunikationsbedarf für jedes Zeitsegment ein passendes Segmentprofil auswählen und es den übrigen Knoten 2 des Funknetzwerks 1 mit Hilfe der Segmentprofilkennung vorgeben.

Ferner ist es möglich, für jeden Netzwerknoten 2 oder für ausgewählte Netzwerkknoten 2 individuelle Segmentprofile vorzusehen, die auf ähnliche Weise durch eine Segmentprofilkennung oder Übertragung der Daten des gesamten Segmentprofils aktiviert werden können bzw. die aus einem globalen Segmentprofil durch einen Knoten selbst erzeugt werden.

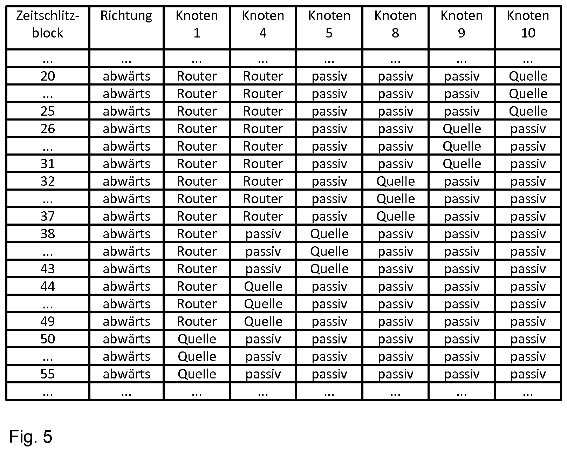

Individuelle Segmentprofile sind bspw. dann vorteilhaft, wenn das Kommunikationsverhalten eines Knotens 2 von seiner individuellen Position in der Baumtopologie des Funknetzwerks 1 abhängig ist. So können sich bspw. mehrere Knoten 2 eines Zweiges einen Abwärtsblockbereich teilen, wenn bspw. in einem Segmentprofil ein Blockbereich von 36 Abwärtskommunikationsblöcken 5 zur Verfügung steht. Dies ist in Fig. 5 beispielhaft für den Abwärtsblockbereich der Zeitschlitzblöcke 20 bis 55 dargestellt.

Dann kann bspw. der Knoten 2 mit der Knotennummer K=10 in Fig. 1 die ersten 6 Blöcke dieses Blockbereichs für die Übertragung seiner Daten verwenden. Die Knoten 2 mit den Knotennummern K=4 und K=1 senden diese dann weiter, ohne mehr als ein Datenpaket zwischenspeichern zu müssen. Von dem siebten bis zum sechsunddreißigsten Block des Blockbereichs hat das individuelle Segmentprofil des Knotens 2 mit der Knotennummer K=10 dann zehn Passiv- bzw. Pausenblöcken, so dass dieser Knoten 2 mit der Knotennummer K=10 hier aufgrund des gewählten Segmentprofils keine Energie für die Netzwerkkommunikation verbrauchen muss. Die Zeitschlitzblöcke aus diesem Blockbereich sind für die Datenübertragung der anderen Knoten 2 dieses Netzwerkzweiges vorgesehen. Entsprechend werden die individuellen Segmentprofile der übrigen Knoten 2 des Topologiezweigs, d.h. die Knoten 2 mit den Knotennummern K=9, 8, 4, 1 gestaltet, so dass der Energieverbrauch jedes Knotens 2 optimiert wird. Darüber hinaus kann bei dieser Art der Zeiteinteilung der Bedarf an Zwischenspeicherungen für die durchzuleitenden Netzwerkknoten 2, die als Router funktionieren, auf ein Datenpaket minimiert werden.

Gemäß einer besonders konfigurationsfreundlichen Variante kann einem Knoten in einem globalen Segmentprofil vorgegeben sein, für welche Nummern oder Bereiche von Zeitschlitzblöcken welche Kommunikationsrichtung vorgesehen ist. Genaue Angaben, welche Knoten genau in welchem Zeitschlitzblock senden, empfangen oder pausieren, sind in dem globalen Segmentprofil erfindungsgemäß nicht enthalten, das also lediglich Bereiche von Zeitschlitzblöcken in einem Zeitsegment einer Kommunikationsrichtung zuordnet. So sind beispielsweise die in Fig. 5 genannten Zeitschlitzblöcke 20 bis 55 im "globalen" Segmentprofil für die Abwärtskommunikation vorgesehen, wie sich aus zweiten Spalte "Richtung" ergibt. Jeder der in Fig. 5 aufgeführten Knoten 2 weiß aus der Kenntnis der Netzwerktopologie, mit welchen anderen Knoten 2 er sich den Netzwerkzweig teilt. So kann er nach bestimmten, für alle Knoten 2 vorgegebenen Regeln (z.B.: "Jeder Knoten im Zweig erhält gleich viele Quellen-Zeitschlitz-Blöcke".) individuell für sich bestimmen, in welchen der Zeitschlitzblöcke er als Datenquelle, als Router oder passiv zu agieren hat. Dann erstellt er selbst für sich ein individuelles Zeitschlitzprofil, das dem in Fig. 5 gezeigten Profil entspricht, wobei es mehr oder weniger Informationen zu den anderen Knoten 2 enthalten kann. Sinnvoll kann es sein, zumindest Sende- und/oder Empfangsinformationen zu seinen Eltern- und/oder Kindknoten mit aufzunehmen.

Bei der Verwendung verschiedener Segmentprofile, sei es bei der Verwendung individueller Segmentprofile für verschiedene Knoten 2 oder der Änderung der Segmentprofile gleichlaufend für alle Knoten 2 in dem Funknetzwerk 1, ist es notwendig, zu Beginn eines Zeitsegments alle beteiligten Knoten hinreichend zuverlässig über das in diesem Zeitsegment zu verwendende Segmentprofil zu informieren. Falls einer der Knoten 2 das anzuwendende Segmentprofil bspw. aufgrund einer Störung im Funkkanal nicht erhält, ist er und - und ggf. auch seine Kindknoten - für die entsprechende Kommunikation während der Dauer dieses Zeitsegments in dem Funknetzwerk 1 nicht verfügbar. In diesem Fall kann der Knoten 2, wenn er keine Information über das zu verwendende Zeitsegmentprofil erhalten hat, ein Profil aus Passiv- bzw. Pausenblöcken verwenden, das ihn zumindest die Kommunikation der übrigen Knoten 2 in dem Funknetzwerk 1 nicht stören lässt.

Die Zuverlässigkeit der Übermittlung der Segmentprofilkennung kann, um den vorbeschriebenen Fall zu vermeiden oder die Eintrittswahrscheinlichkeit dafür erheblich zu vermindern, durch mehrmalige Aussendung dieser Information, bspw. die 6- bis 8-malige Aussendung, erheblich erhöht werden. Bei Übertragung der Segmentprofilkennung in den Synchronisations-Datenpaketen wirkt sich diese wiederholte Aussendung außerdem positiv auf die Synchronität des Funknetzwerks 1 aus, da das gesamte Synchronisations-Datenpaket mehrfach gesendet wird. Damit werden auch Ausfälle durch vorübergehende Asynchronität des Funknetzwerks 1 minimiert. Die wiederholte Aussendung bspw. der Synchronisations-Datentelegramme erhöht allerdings auch den Ladungsverbrauch, was bei batteriebetriebenen Knoten 2 kritisch ist, zumal diese multiple bzw. mehrfache Aussendung regelmäßig in jedem sich wiederholenden Zeitsegment ansteht, so dass sich der Mehrverbrauch von Energie über eine Lebensdauer von 10 und mehr Jahren einer Batterie in einem Knoten 2 zu einem signifikanten Betrag summiert.

Um diesen Mehrverbrauch an Energie zu beschränken, kann zu Beginn jedes Zeitsegments ein Aufwärtsblockbereich aus 6 bis 8 Aufwärts-Zeitschlitzblöcken 5 für die Übertragung von Synchronisations-Datenpaketen mit der Segmentprofilkennung vorgesehen werden, wobei eine mehrfache Aussendung nur bei Bedarf erfolgt, d.h. wenn Aussendungen tatsächlich nicht beim Empfängerknoten 2 ankommen.

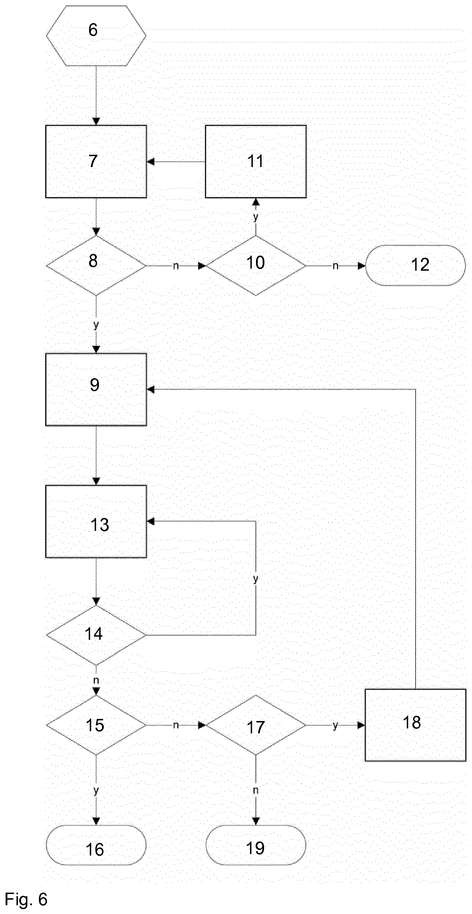

Das dafür beschrieben Verfahren wird nachfolgend anhand des Flussdiagramms gemäß Fig. 6 beschrieben. Nach dem Start 6 durch Setzen des Zeitschemas bspw. durch Aussendung eines Synchronisations-Datenpakets durch den Zentralknoten 3 geht jeder Knoten 2 in den Aufwärtszeitschlitzblöcken 5 wie oben beschrieben in dem Sendezeitschlitz seines Elternknotens auf Empfang. Im Beispiel der Topologie gemäß Fig. 1 sind dies also die Knoten 2 mit den Knotennummern K=1, K=2 und K=3, die im Zeitschlitz Z=0 des Zentralknotens 3 mit der Knotennummer K=0 auf Empfang gehen, in denen ihr Elternknoten das Synchronisationstelegramm aussendet. Es folgt ein Empfang bzw. Empfangsversuch 7 im Zeitschlitz des Elternknotens. Anschließend findet eine Überprüfung 8 dieses Empfangs in dem empfangenden Knoten statt.

Im Fall eines erfolgreichen Empfangs sendet der empfangende Knoten das empfangende Datenpaket in seinem eigenen Zeitschlitz des Aufwärts-Zeitschlitzblocks 5 wieder aus. Diese Wiederaussendung 9 des Datenpakets durch den empfangenden Knoten 2 wird durch den sendenden Knoten 2, 3 in nachfolgend noch näher zu beschreibender Weise überprüft.

Falls die Überprüfung 8 des Empfangs nicht erfolgreich ist und der empfangende Knoten 2 das Synchronisations-Datenpaket nicht empfängt, versucht er es in dem nächsten vorgesehenen Zeitschlitzblock des für den Empfang des Synchronisations-Datenpakets vorgesehenen Zeitschlitzblockbereichs erneut. Hierzu findet eine Überprüfung 10 statt. Zeigt diese Überprüfung an, dass noch übrige Zeitschlitzblöcke in der Aufwärtskommunikation vorhanden sind, geht der empfangende Knoten in eine Warteperiode 11 auf den nächsten Zeitschlitzblock, um in dem dann entsprechenden Zeitschlitz zum Empfangen des Synchronisations-Datenpaktes des in diesem Beispiel Zentralknotens 3 auf Empfang zu gehen.

Zeigt die Überprüfung 10 an, dass der Aufwärts-Zeitschlitzblock für den Empfang von Synchronisations-Datenpaketen zu Ende ist, wird die Übertragung ohne Erfolg beendet und dem Knoten ein intern gespeichertes Zeitsegmentprofil mit Pausenzeitschlitzblöcken zugeordnet.

Nach einem erfolgreichen Empfang durch den empfangenden Knoten sendet dieser, wie bereits beschrieben, das Synchronisations-Datenpaket in der Wiederaussendung 9 weiter aus. Weil der sendende Knoten, in dem beschriebenen Beispiel der sendende Zentralknoten 3, Kenntnis von dem Adressat der gesendeten Daten hat, geht der sendende Knoten (hier also der Zentralknoten 3) in den Zeitschlitzen Z auf Empfang, in denen seine unmittelbaren Kindknoten die gesendeten Daten wiederaussenden.

Es findet ein also Empfang 13 der Kindknoten 2 des empfangenden Knotens 2 durch den sendenden Knoten (bzw. in diesem Beispiel den Zentralknoten) statt. Wenn noch nicht alle aufgrund der Adressierung des Datenpakets angesprochenen Kindknoten die Daten wiederausgesendet haben, bzw. diese Wiederaussendung nicht durch den sendenden Knoten empfangen wurden, geht der sendende Knoten 2 erneut auf Empfang 13, um die Wiederaussendung 9 zu empfangen.

Falls der sendende Knoten 2 die Wiederaussendungen aller der Kindknoten des empfangenden Knoten empfängt, ist sichergestellt, dass alle für die Kommunikation mit diesem Datenpaket notwendigen empfangenden Knoten 2 seine vorherige Aussendung bereits empfangen haben. Der sendende Knoten 2 kann dann für den Rest des Aufwärtsblocks seine Kommunikationsaktivität einstellen, um keine weitere Batterieenergie zu verbrauchen.

Diese Überprüfung erfolgt in der Überprüfung 15 des Empfangs aller Kindknoten. Ist dies der Fall, wird die Übertragung als erfolgreich angesehen und der sendende Knoten 2 stellt seine Sendeaktivität für diese Daten, d.h. im konkreten Beispiel die Synchronisations-Datenpakete, in diesem Zeitsegment ein. Dies ist durch das Ende 16 der Kommunikation der aktuellen Daten angedeutet.

Wird bei der Überprüfung des Empfangs aller Kindknoten dagegen festgestellt, dass noch nicht alle Kindknoten empfangen wurden, erfolgt eine Überprüfung 17 auf noch übrige Zeitschlitzblöcke im Zeitschlitzblockbereich. Ist dies der Fall, folgt eine weitere Wartperiode 18 auf den nächsten Zeitschlitzblock, um die Wiederaussendung 9 des Datenpakets durch den empfangenden Knoten 2 in dem sendenden Knoten 2 zu detektieren. Andernfalls wird in dem Ende 19 die Kommunikation in diesem Zeitsegment beendet und dieses Zeitsegment mit Pausenzeitschlitzblöcken gefüllt.

Zusammenfassend kann man also sagen, dass, falls der sendende Knoten die Wiederaussendung der Daten aller seiner Kindknoten empfängt, sichergestellt ist, dass diese seine vorherige Aussendung empfangen haben. Dann kann der sendende Knoten für den Rest des Aufwärtsblockbereichs seine Kommunikationsaktivitäten einstellen, um keine weitere Batterieenergie zu verbrauchen. Falls der sendende Knoten im aktuellen Zeitschlitzblock allerdings nicht von allen seinen Kindknoten eine Wiederaussendung empfängt, wiederholt er seine Aussendung im nächsten Zeitschlitzblock und geht anschließend in den Zeitschlitzen jeder Kindknoten, deren Wiederaussendung er bisher noch nicht empfangen hatte, erneut auf Empfang. Dies wiederholt er so lange, bis er entweder die Wiederaussendungen jedes seiner Kindknoten empfangen hat oder der Aufwärtsblockbereich zu Ende ist.

Der Zentralknoten 3 ist insofern eine Ausnahme, als er keinen Elternknoten hat und er deshalb in jedem Zeitsegment gemäß dem beschriebenen Verfahren eigeninitiativ seine Synchronisations-Datenpakete aussendet. Allerdings findet die Überwachung der Aussendung wie eben beschrieben statt.

Dies gilt analog für jede der Hierarchieebenen, so dass das vorstehend beschriebene Verfahren des Listen Achnowledge für jeden beliebigen sendenden Knoten möglich ist. Auch kann das Verfahren sowohl in der beschriebenen Aufwärtskommunikationsrichtung als auch in der dem konkreten Beispiel nicht beschriebenen Abwärtskommunikationsrichtung eingesetzt werden, ohne dass sich an der Art des Verfahrens etwas ändert.

Durch dieses Verfahren wird eine hohe Zuverlässigkeit der Übertragung des Synchronisations-Datenpakets und der Segmentprofilkennung durch das gesamte Funknetzwerk bei gleichzeitig niedrigem durchschnittlichen Batterieladungsverbrauch erzielt, weil die Wiederholung nur im Bedarfsfall erfolgt. Das hier beschriebene Verfahren der Mehrfachaussendung lässt sich natürlich nicht nur auf die Übermittlung der Synchronisations-Datenpakte anwenden, sondern ist für alle Datenübertragungen im beschriebenen Funknetzwerk geeignet, wobei die Länge des vorgesehenen Blockbereichs für die Mehrfachaussendungen daran bemessen werden kann, welche Zuverlässigkeit gefordert wird bzw. welche Restausfallwahrscheinlichkeit noch tolerierbar ist.

Insgesamt wird mit dem erfindungsgemäß vorgeschlagenen Verfahren der Zuordnung der Zeitschlitze zu Netzknoten in Abhängigkeit von der Kommunikationsrichtung eine schnelle Datenübertragung durch das gesamte Funknetzwerk 1 innerhalb eines Zeitschlitzblocks ermöglicht. Durch den Einsatz von Segmentprofilen kann das Funknetzwerk 1 flexibel an den jeweils aktuellen Kommunikationsbedarf angepasst werden. Dies kann sowohl durch vorprogrammierte Standard-Segmentprofile als auch durch ad hoc generierte Segmentprofile geschehen, die dann als Gesamtdaten übertragen werden.

Der Einsatz netzknotenindividueller Segmentprofile erlaubt eine weitere Optimierung der Datenübertragung im Netzwerk hinsichtlich Übertragungsdauer und Energieverbrauch. Außerdem helfen diese netzwerkindividuellen Segmentprofile, den Zwischenspeicherbedarf in weiterleitenden Knoten, d.h. als Router funktionierenden Knoten, auf die Länge eines Datenpakets zu begrenzen. Bei der Festlegung der Segmentprofile kann ferner auf einfache Weise die Einhaltung von Funkzulassungsbestimmungen hinsichtlich Mindestsendezeitpausen sichergestellt werden.

Eine besonders hohe Zuverlässigkeit bei gleichzeitig weiter optimiertem Energieverbrauch stellt auch das erfindungsgemäß vorgestellte Verfahren zur bedarfsgerechten Wiederholung von Aussendungen dar, welches die Zuverlässigkeit der Datenübertragung in unsicheren Medien wie Funk bei gleichzeitiger Optimierung des Energieverbrauchs der einzelnen Knoten verbessert.

### Bezugszeichenliste:

- 1: Funknetzwerk
- 2: Knoten, Datensammler
- 3: Zentralknoten, Masterdatensammler
- 4: Zeitschlitzblock für Aufwärtskommunikation
- 5: Zeitschlitzblock für Abwärtskommunikation
- 6: Start des Zeitschemas bzw. Zeitsegments
- 7: Empfang im Zeitschlitz des Elternknotens
- 8: Überprüfung des Empfangs
- 9: Wiederaussendung des Datenpakets durch den empfangenden Knoten
- 10: Überprüfung auf noch übrige Zeitschlitzblöcke im Zeitschlitzblockbereich
- 11: Warteperiode auf den nächsten Zeitschlitzblock
- 12: Ende der Kommunikation im Zeitsegment
- 13: Empfang der Kindknoten
- 14: Überprüfung auf noch vorhandene Zeitschlitze nicht empfangener Kindknoten im Blockbereich
- 15: Überprüfung des Empfangs aller Kindknoten
- 16: Ende der Kommunikation der aktuellen Daten
- 17: Überprüfung auf noch übrige Zeitschlitzblöcke im Zeitschlitzblockbereich
- 18: Warteperiode auf den nächsten Zeitschlitzblock
- 19: Ende der Kommunikation im Zeitsegment

## Patentansprüche

1. Verfahren zur Übertragung von Daten in einem hierarchisch gegliederten Funknetzwerk (1), in dem Daten über Knoten (2) des Funknetzwerks (1) zu einem Zentralknoten (3) übertragen werden und/oder Daten von einem Zentralknoten (3) zu einem oder mehreren Knoten (2) übertragen werden und das in einer Baumtopologie mit dem Zentralknoten (3) als Wurzel aufgebaut ist, wobei jedem Knoten (2, 3) eine eindeutige Knotennummer (K), genau ein Zeitschlitz (Z) zum Senden von Daten in dem Funknetzwerk (1) und ein Elternknoten (2, 3) zugewiesen sind, **dadurch gekennzeichnet, dass** die Zeitschlitze (Z) der Knoten (2, 3) in von der Kommunikationsrichtung abhängigen Zeitschlitzblöcken zusammengefasst sind, wobei die Knotennummern (K) derart gewählt werden, dass jeder Knoten (2) eine höhere Knotennummer (K) als sein Elternknoten (2, 3) aufweist, und dass die Zuordnung der Knotennummer (K) zu einem Zeitschlitz (Z) in den Zeitschlitzblöcken abhängig von der Kommunikationsrichtung durch die Hierarchieebenen (H) des Funknetzwerks (1) derart erfolgt, dass in einem Aufwärts-Zeitschlitzblock (4) in Aufwärtskommunikationsrichtung von dem Zentralknoten (3) zu einem oder mehreren Knoten (3) ein Knoten (2) mit einer höheren Knotennummer (K) einem in dem Zeitschlitzblock später angeordneten Zeitschlitz (Z) zugeordnet ist und dass in einem Abwärts-Zeitschlitzblock (5) in der Abwärtskommunikation von einem Knoten (2) zu dem Zentralknoten (3) ein Knoten (2, 3) mit einer niedrigeren Knotennummer (K) einem in dem Zeitschlitzblock später angeordneten Zeitschlitz (Z) zugeordnet ist.

2. Verfahren nach Anspruch 1, **dadurch gekennzeichnet, dass** den Knoten (2, 3) hierarchieebenenweise aufsteigend und/oder zweigweise aufsteigend eine höhere Knotennummer (K) zugewiesen wird.

3. Verfahren nach einem der vorhergehenden Ansprüche, **dadurch gekennzeichnet, dass** der Aufwärts-Zeitschlitzblock (4) für die Aufwärtskommunikation und der Abwärts-Zeitschlitzblock (5) für die Abwärtskommunikation im zeitlichen Wechsel angewendet werden.

4. Verfahren nach einem der vorhergehenden Ansprüche, **dadurch gekennzeichnet, dass** eine Mehrzahl von Zeitschlitzblöcken (4, 5) aus Aufwärts-Zeitschlitzblöcken (4), Abwärtszeitschlitzblöcken (5) und Pausenzeitschlitzblöcken in einer
vorgegebenen Anordnung zu einem Zeitsegment zusammengefasst werden.

5. Verfahren nach Anspruch 4, **dadurch gekennzeichnet, dass** die Anordnung von Aufwärts- und Abwärts-Zeitschlitzblöcken (4, 5) in dem Zeitsegment durch ein Segmentprofil festgelegt wird, wobei eine Segmentprofilkennung des Segmentprofils und/oder das vollständige Segmentprofil vorzugsweise durch den Zentralknoten (3) an andere Knoten (2) im Funknetzwerk (1) übertragen wird.

6. Verfahren nach Anspruch 5, **dadurch gekennzeichnet, dass** die Segmentprofilkennung in einem Synchronisations-Datenpaket mit übertragen
wird.

7. Verfahren nach Anspruch 5 oder 6, **dadurch gekennzeichnet, dass** ein Knoten (2, 3) in dem Funknetzwerk (1) ein individuelles Segmentprofil verwendet.

8. Verfahren nach einem der Ansprüche 5 bis 7, **dadurch gekennzeichnet, dass** ein Knoten (2, 3), sofern er kein Segmentprofil zugewiesen bekommen hat, ein ausschließlich aus Passivblöcken bestehendes Segmentprofil verwendet, wobei im Rahmen dieser Passivblöcke keine Kommunikation dieses Knotens und seiner hinter ihm in rangniedrigeren Hierarchieebenen liegenden, als Kindknoten bezeichneten Knoten mit dem übrigen Funknetzwerk stattfindet.

9. Verfahren nach einem der vorhergehenden Ansprüche, **dadurch gekennzeichnet, dass** Daten in dem Funknetzwerk (1) durch den sendenden Knoten (2, 3) mehrfach ausgesendet werden.

10. Verfahren nach Anspruch 9, **dadurch gekennzeichnet, dass** der sendende Knoten (2, 3) bei Daten, die mehrfach auszusenden sind, überprüft, ob diese Daten von den oder dem in Kommunikationsrichtung nachgeordneten Knoten (2) wieder ausgesendet werden, indem der sendende Knoten (2) ein Empfangszeitfenster zu dem Zeitpunkt öffnet, zu dem der nachgeordnete Knoten (2) wieder aussendet oder die nachgeordneten Knoten (2) die Daten wieder aussenden, und dass die Mehrfachaussendung der Daten abgebrochen wird, wenn der sendende Knoten (2, 3) die durch den nachgeordneten Knoten (2) oder die nachgeordneten Knoten (2) ausgesendeten Daten empfängt.

11. Verfahren nach Anspruch 9 oder 10, **dadurch gekennzeichnet, dass** durch Vorgabe einer bestimmten Anzahl von Zeitschlitzblöcken für eine Kommunikationsrichtung die Anzahl der maximalen Wiederholungen der Daten vorgegeben wird.

12. Gerät zur Teilnahme an der Kommunikation in einem hierarchisch gegliederten Funknetzwerk (1) mit einem Sender, einem Empfänger und einem Mikroprozessor, **dadurch gekennzeichnet, dass** der Mikroprozessor zur Durchführung des Verfahrens nach einem der Ansprüche 1 bis 11 eingerichtet ist, wenn das Gerät in das Funknetzwerk integriert ist.

13. Funknetzwerk zur Übertragung von Daten, welches aus Geräten (2, 3) mit einem Sender, einem Empfänger und einem Mikroprozessor aufgebaut ist, wobei die Geräte (2, 3) dazu eingerichtet sind, Daten an andere Geräte (2, 3) in dem Funknetzwerk (1) zu senden bzw. von anderen Geräten (2, 3) in dem Funknetzwerk (1) zu empfangen, **dadurch gekennzeichnet, dass** die an dem Funknetz teilnehmenden Geräte (2, 3) nach Anspruch 12 ausgebildet sind.

## Claims

1. A method for transmitting data in a hierarchically structured radio network (1), in which data are transmitted across nodes (2) in the radio network (1) to a central node (3) and/or data are transmitted from a central node (3) to one or a plurality of nodes (2) and which is built up in a tree topology with the central node (3) as the root, wherein each node (2, 3) is allocated a unique node number (K), exactly one time slot (Z) for the transmission of data in the radio network (1) and a parent node (2, 3), **characterized in that** the time slots (Z) of the nodes (2, 3) are combined in time slot blocks which depend on the communication direction, wherein the node numbers (K) are chosen in such a manner that each node (2) has a higher node number (K) than its parent node (2, 3) and the assignment of the node number (K) to a time slot (Z) in the time slot blocks depends on the communication direction through the hierarchy levels (H) of the radio network (1), in such a manner that in an upwards time slot block (4) in an upwards communication direction from the central node (3) to one or a plurality of nodes (3) a node with a higher node number (K) is assigned to a time slot (Z) arranged later in the time slot block and that in a downwards time slot block (5) in the downwards communication from a node (2) to the central node (3), a node (2, 3) with a lower node number (K) is assigned to a time slot (Z) arranged later in the time slot block.

2. The method according to claim 1, **characterized in that** the nodes (2, 3) are assigned a higher node number (K) ascending by hierarchical level and/or ascending by branch.

3. The method according to one of the preceding claims, **characterized in that** the upwards time slot block (4) for upwards communication and the downwards time slot block (5) for downwards communication are used alternatively in time.

4. The method according to one of the preceding claims, **characterized in that** a plurality of time slot blocks (4, 5) comprising upwards time slot blocks (4), downwards time slot blocks (5) and pause time slot blocks of a predefined arrangement are combined into a time segment.

5. The method according to claim 4, **characterized in that** the arrangement of upwards and downwards time slot blocks (4, 5) is established in the time segment by a segment profile, wherein a segment profile identifier of the segment profile and/or the complete segment profile is preferably transmitted by the central node (3) to other nodes (2) in the radio network (1).

6. The method according to claim 5, **characterized in that** the segment profile identifier is also transmitted in a synchronization data packet.

7. The method according to claim 5 or 6, **characterized in that** a node (2, 3) in the radio network (1) uses an individual segment profile.

8. The method according to one of claims 5 to 7, **characterized in that** a node (2, 3), insofar as it has not been allocated a segment profile, uses a segment profile made up exclusively of passive blocks, wherein within the framework of these passive blocks, no communication of this node and its node located behind it in lower-ranking hierarchy levels, referred to as a child node, takes place with the remaining radio network.

9. The method according to one of the preceding claims, **characterized in that** data is transmitted multiple times in the radio network (1) by the transmitting node (2, 3).

10. The method according to claim 9, **characterized in that** the transmitting node (2, 3) checks in the case of data which are to be transmitted multiple times whether these data are transmitted again from the node or nodes (2) which are subordinate in the communications direction, **in that** the transmitting node (2) opens up a receiving time window at the point in time at which the subordinate node (2) transmits again or the subordinate nodes (2) transmit the data again and that the multiple transmission of the data is interrupted when the transmitting node (2, 3) receives the data transmitted by the subordinate node (2) or the subordinate nodes (2).

11. The method according to claim 9 or 10, **characterized in that** by specifying a particular number of time slot blocks for a communications direction, the number of maximum data repetitions is specified.

12. A device for participation in the communication in a hierarchically structured radio network (1) with a transmitter, a receiver and a microprocessor, **characterized in that** the microprocessor is set up to implement the method according to one of claims 1 to 11, when the device is integrated in the radio network.

13. A radio network for the transmission of data which is made up of a transmitter, a receiver and a microprocessor, wherein the devices (2, 3) are set up to transmit data to other devices (2, 3) in the radio network (1) and also to receive data from other devices (2, 3) in the radio network (1), **characterized in that** the devices (2, 3) participating in the radio network are configured according to claim 12.

## Revendications

1. Procédé de transmission de données dans un réseau radio partagé de manière hiérarchique (1), dans lequel des données sont transmises par l'intermédiaire de noeuds (2) du réseau radio (1) vers un noeud central (3) et/ou des données des données sont transmises par un noeud central (3) à plusieurs noeuds (2) et qui est structuré dans une topologie d'arborescence avec le noeud central (3) faisant office de racine, étant associé à chaque noeud (2, 3) un numéro de noeud univoque, (K), précisément un laps temporel (Z) pour envoyer des données dans le réseau radio (1) et un noeud parent (2, 3), **caractérisé en ce que** les laps temporels (Z) des noeuds (2, 3) des blocs de laps temporel dépendant du sens de communication sont regroupés, les numéros de noeuds (K) étant sélectionnés de manière à ce que chaque noeud (2) présente un numéro de noeud (K) supérieur à celui de son noeud parent (2, 3) et que l'association des numéros de noeuds (K) à un laps temporel (Z) dans les blocs de laps temporels est effectuée en fonction du sens de communication à travers les plans hiérarchiques (H) du réseau radio (1) de manière à ce que, dans un bloc de laps temporel montant (4) dans le sens de communication montant depuis le noeud central (3) vers un plusieurs noeuds (3), un noeud (2) dont le numéro de noeud (K) est supérieur est associé à un laps temporel disposé ultérieurement dans le bloc de laps temporels (5) et que, dans le sens de communication descendant depuis un noeud (2) jusqu'au noeud central (3), un noeud (2, 3) ayant un numéro de noeud inférieur (K) est associé à un laps temporel (Z) disposé ultérieurement dans le bloc de laps temporel.

2. Procédé selon la revendication 1, **caractérisé en ce qu'**un numéro de noeud plus élevé (K) est associé au noeud (2, 3) en montant suivant le plan hiérarchique et/ou en montant de manière ramifiée (K).

3. Procédé selon une des revendications précédentes, **caractérisé en ce que** le bloc de laps temporels montants (4) est utilisé pour la communication montante et le bloc de laps temporels descendants (5) est utilisé pour la communication descendante en alternance temporelle.

4. Procédé selon une des revendications précédentes, **caractérisé en ce qu'**une pluralité de blocs de laps temporels (4, 5) parmi les blocs de laps temporels montants (4), de laps temporels descendants (5) et de laps temporel de pause sont regroupés en une disposition prédéfinie en un segment temporel.

5. Procédé selon la revendication 4, **caractérisé en ce que** la disposition de blocs de laps temporels montants et descendants (4, 5) dans le segment temporel est défini par un profil de segment, un identifiant de profil de segment du profil de segment et/ou le profil de segment complet étant de préférence transmis par le noeud central (3) à d'autres noeuds (2) dans le réseau radio (1).

6. Procédé selon la revendication 5, **caractérisé en ce que** l'identifiant de profil de segment est transmis en même temps dans un paquet de données de synchronisation.

7. Procédé selon la revendication 5 ou 6, caractérisé en qu'un noeud utilise un profil de segment individuel (2, 3) dans le réseau radio (1).

8. Procédé selon une des revendications 5 à 7, **caractérisé en ce qu'**un noeud (2, 3), dans la mesure où aucun profil de segment ne lui est attribué, utilise un profil de segment existant composé exclusivement de blocs passifs, sachant que, dans le cadre de ces blocs passifs, aucune communication de ce noeud et de ses noeuds se trouvant derrière lui dans les plans hiérarchiques de rang inférieur et appelé noeud enfant avec le reste du réseau radio ne se produit.

9. Procédé selon une des revendications précédentes, **caractérisé en ce que** des données sont envoyées plusieurs fois dans le réseau radio (1) par le noeud expéditeur (2, 3).

10. Procédé selon la revendication 9, **caractérisé en ce que** le noeud expéditeur (2, 3), dans le cas de données qu'il faut envoyer plusieurs fois, vérifie si ces données sont renvoyées par les noeuds (2) situés en aval dans le sens de communication par le fait que le noeud expéditeur ouvre une fenêtre temporelle de réception au moment auquel le noeud situé en aval (2) renvoie ou les noeuds situés en aval (2) renvoient des données et que l'expédition multiple des données est interrompue si le noeud expéditeur (2, 3) reçoit des données envoyées par le noeud situé en aval (2) ou les noeuds situés en aval (2).

11. Procédé selon la revendication 9 ou 10, **caractérisé en ce que** le nombre de répétitions maximales des données est prédéfini par prescription d'un certain nombre de blocs de laps temporels pour un sens de communication.

12. Appareil destiné à participer à la communication dans un réseau radio partagé de manière hiérarchique (1), comportant un émetteur, un récepteur et un microprocesseur, **caractérisé en ce que** le microprocesseur est conçu pour réaliser le procédé selon une des revendications 1 à 11 lorsque l'appareil est intégré dans le réseau radio.

13. Réseau radio destiné à transmettre des données et qui est composé d'appareils (2, 3) comportant un émetteur, un récepteur et un microprocesseur, les appareils (2, 3) étant conçus pour envoyer des données à d'autres appareils (2, 3) dans le réseau radio (1) ou en recevoir d'autres appareils (2, 3) dans le réseau radio (1), **caractérisé en ce que** les appareils (2, 3) participant au réseau radio sont réalisés selon la revendication 12.
